# EUROPÄISCHE PATENTANMELDUNG

(11) **EP 1 486 920 A2**
(43) Veröffentlichungstag der Anmeldung: **15.12.2004**
(21) Anmeldenummer: 04090227.2
(22) Anmeldetag: 10.06.2004
(51) Int. Cl.: G06T 7/00, G06T 17/50

(54) **Fernerkundungsverfahren**

(30) Priorität: 11.06.2003 DE 10327357
(71) Anmelder: Halbritter, Klaus Rudolf, 59227 Ahlen (DE)
(72) Erfinder: Halbritter, Klaus Rudolf, 59227 Ahlen (DE)

(57) **Zusammenfassung**

Die Erfindung betrifft ein Verfahren zur Fernerkundung morphologisch und strukturell komplexer Objekte in einem Objektraum, mit den Schritten:
a) Erfassen von Topometriedaten und -informationen in dem Objektraum;
b) Erfassen von Morphometriedaten und -informationen;
c) Auswerten der Topometriedaten und -informationen und der Morphometriedatenund -informationen
d) Wiedergeben der ausgewerteten Topometriedaten und -informationen und Morphometriedaten und -informationen als maschinenlesbare oder sensitiv wahrnehmbare Datensätze,
gekennzeichnet dadurch, dass die ausgewerteten Topometriedaten und
- informationen sowie Morphometriedaten und -informationen einem Sondermodul aus einer Gruppe von Parametern zur Verfügung gestellt werden.

## Beschreibung

**Verallgemeinerung der Verfahrensanwendung:** Wenn im folgenden die Begriffe «Wald» oder «Bäumen» verwendet werden, so geschieht dies exemplarisch anhand dieses bevorzugten Anwendungsbeispiels, waldbildender Holzpflanzen, für alle in Betracht kommenden Objekte in einem Objekt- oder Merkmalsraum. Wie schon in der älteren Anmeldung erklärt, so arbeitet auch das hier neu vorgestellte Verfahren maßstabsfrei, also mit beliebiger Maßeinheit, von gegen Null konvergierender bis hin zu gegen unendlich konvergierender geometrischer Auflösung. Als Maßeinheit kämen also nicht nur ein Meter, sondern eine beliebige andere Maßeinheit (z.B. Nanometer, Mikrometer, Dekameter, Hektometer, Kilometer, Lichtjahr) in Betracht. Es werden demnach über die Beobachtungsgegenstände Bäume und Wald hinaus Anwendungsmöglichkeiten des Verfahrens auf alle in der älteren Anmeldung erwähnten Beobachtungsgegenstände und Fragestellungen geltend gemacht. Um den folgenden Text nicht unleserlich zu machen wird das Verfahren und dessen Vorgehensweise durchweg anhand des Beispiels «Wald» beschrieben. Für die Übertragung des Verfahrens auf andere Beobachtungsgegenstände wäre dann das Wort «Wald» zu ersetzen durch «**Gesamtobjekt**», das Wort «Baum» durch **«Einzelobjekt aus dem Gesamtobjekt».** Ausschnitte aus dem Gesamtobjekt, die mehr als ein Einzelobjekt enthalten, wären am Beispiel von Wald eine Bewirtschaftungseinheit, eine Landschaft oder eine Region von beliebiger Flächengröße; im allgemeineren Fall wäre es eine «**Objektgruppe**». Die hier beispielhaft erwähnten Charakteristika einzelner Bäume entsprechen dann dort den «**Charakteristika einzelner Objekte**» des Gesamtobjekts. Auf das gesamte Untersuchungsgebiet bezogene Charakterisierungen entsprechen im allgemeineren Fall den «**Charakteristika des Gesamtobjekts**» Weitere Betrachtungen im Zusammenhang mit dem anderen Beobachtungsgegenstand wären dann sinngemäß zu übertragen auf das Fachvokabular und die semantischen Gebräuche des jeweiligen Anwendungsgebiets. Die Begriffe zur verbalen Beschreibung des zu betrachtenden Gegenstands ergeben sich aus dem jeweils verwendeten Skalenniveau der Betrachtung. Sie verwenden dabei die branchenübliche Nomenklatur oder bedienen sich fachneutraler Begriffe z.B. solcher der allgemeinen Form-, Gestalt-, Bild-, Signal-, Muster-, Textur- oder Strukturbeschreibung für Obj ekte, Räume, Signale, Merkmalsverteilungen etc.

Die im folgenden charakterisierte Verfahrensbeschreibung geht deutlicher auf die Nutzanwendungen der älteren Anmeldung ein als es dort der Fall war. Sie erläutert ausführlich, was mit den in der älteren Anmeldung vorgestellten Analysen und Charakterisierungen gemacht werden kann und schildert deren Einsatz und verfahrenstechnischen Umsetzungen bei Nutzanwendungen. Das hier vorgestellte Verfahren ist neu und wird unzweifelhaft künftig zu den Standardverfahren zu rechnen sein.

Vor allem deren Einsatz zur abstrakten Modellierung realer Gegebenheiten, sowie für die Simulation von Folgen *künftig potentiell eintretender* **Ereignisse** innerhalb des Untersuchungsgebiets oder von **Impakten** auf das Untersuchungsgebiet (z.B. einen Wald oder einer Landschaft mit Baumbeständen oder mit Beständen anderen Pflanzenarten) werden im folgenden verdeutlicht.

Mit diesem Verfahren werden alle Pflanzenbestände, deren realen Charakteristiken nicht nur durch Spektralbilder, sondern über diese hinaus zumindest durch digitale Oberflächenmodelle rekonstruierbar sind. Der Grundgedanke der methodischen Ansätze ist es, v.a. auch die morphologischen und strukturellen Gegebenheiten im Untersuchungsgebiet weitest möglich automatisiert zu quantifizieren und als Klassifikationsmerkmal verwendbar zu machen. **Spektralbilder** werden immer dann eingesetzt, wenn sich aus diesen solche Merkmale automatisiert extrahieren lassen, welche aus den digitalen Oberflächenmodellen nicht extrahierbar sind. Als **automatisiert extrahierbar** gelten solche Merkmale, welche durch Variablen repräsentiert werden können, die bei Anwendung des Verfahrens automatisiert mit Werten belegt werden. Dabei können diese Variablen **Primärvariablen** als auch **Sekundärvariablen** sein.

Aufgaben des Simulators: **Eingriffe** in das Bestandesgefüge (soweit bei der jeweils eingesetzten Fernerkundungstechnik und bei gegebener geometrischer Auflösung identifizierbar) simulieren und deren **Folgen** für die (Wald)vegetation, für die Tierarten und für die nicht organischen Komponenten - aber auch für die Umgebung des Pflanzenbestandes analysieren, ehe die Eingriffe tatsächlich stattgefunden haben oder durchgeführt werden.

Ebenso können *bereits eingetretene* Ereignisse genau analysiert werden um aus dem Zusammenwirken verschiedener quantifizierbarer Faktoren (anhand von in den zu analysierenden Datensätzen extrahierbaren Variablen im Einzelfall mit Werten belegt) Schlüsse ziehen zu können für künftige Entscheidungen über die **Weiterbehandlung** der naturräumlichen Ausstattung eines Untersuchungsgebietes. Für die **retrospektive Analyse** werden archivierte Fernerkundungsaufzeichnungen ausgewertet.

Entscheidend für dieses Verfahren ist, dass es gestattet, zunächst **Einzelobjekte** aus dem Datensatz auszuwählen (z.B. durch Anklicken mit der Maus auf einem Bildschirm). Diese Einzelobjekte sind entweder bereits *unmittelbar* im importierten Originaldatensatz als solche erkennbar enthalten oder ergeben sich *indirekt* aus der Vorverarbeitung des für die Analyse mittels des Verfahrens TREESCAPE benötigten ***dVOM*** (digitales Waldoberflächenmodell, siehe unten) bzw. des Spektraldatensatzes oder sind ein *abgeleitetes* Resultat spezieller Segmentierungsverfahren des Datensatzes. Mehrere mögliche Segmentierungsverfahren, z.B. das *lokale Formfitting* (lokales Anschmiegen biologisch plausibler Hohlformen an die Oberfläche des digitalen Oberflächenmodells), die *Extraktion von Lücken* im Pflanzenbestand, die Erzeugung der vektorbasierten Konturlinien von *Höhenschichtmodellen* des Wuchsraums des Pflanzenbestandes und die Erzeugung von Projektionen des Umfangpolygons der Lichtkronenbasis auf die Bezugsebene (*Kronenprojektionen*) wurden bereits in der Anmeldung (101 60 179.4-52 Halbritter) beschrieben. Weiter unten wird die **Erzeugung von Kronenprojektionen** auf die Bezugsebene (auf den Waldboden) gegenüber der älteren Anmeldung verbessert erläutert. Ferner wird eine Verbesserung des **Formfittings** beschrieben. Ansonsten ergeben sich die weiter unten vorgestellten Anwendungen aus den methodischen Bausteinen der älteren Anmeldung, teilweise auch durch Kombination von zwei oder mehr den methodischen Bausteinen.

Jede resultierende **Datei mit Lagekoordinaten** kann anschließend weiterverarbeitet werden (wie in der Anmeldung 101 60 179.4-52 Halbritter und weiter unten beschrieben). Über die ältere Anmeldung hinausgehend wird hier weiter unten beschrieben, dass **das Abspeichern der Positionen** von Einzelobjekten innerhalb eines Koordinatensystems (anhand deren Lagekoordinaten) in digitale Dateien über die dort beschriebene anschließende Analyse mit verschiedenen Methoden hinausgehend dadurch nützlich ist, dass **der Export von Positionskoordinaten in mobile geodätische Mess- und Navigationsinstrumente** durch das Navigieren von Menschen oder Maschinen hin zu ausgewählten Orten weiterführenden Nutzen hat.

Die resultierende **Datei mit räumlichen Koordinaten ausgewählter Objekte** (Baumkronen, Lücken in der Vegetation) kann also aus dem Computer exportiert und in **ein mobiles Gerät zur Ortsbestimmung oder Navigation** im Gelände importiert werden. Hierfür kommen mobile Empfänger (für satellitengestützte Ortsbestimmung, z.B. mittels Global Positioning System - GPS - oder mit einem vergleichbaren System, z.B. GALILEO, GLONASS) oder andere Instrumente zur geodätischen Lagebestimmung (z.B. digitale Tachymeter für die Erdvermessung, integrierte Systeme zur Navigation wie mobile Feldaufnahmecomputer in Kombination mit Einrichtungen zur Positionsbestimmung) in Betracht. Voraussetzung für den Einsatz solcher Geräte zur Lagebestimmung bzw. Navigation ist, dass zumindest eine Datei mit Koordinaten (zumindest Lagekoordinaten, ggf. auch Höhenkoordinaten) in ein solches importiert werden kann oder dass solche Koordinatenwerte in anderer Weise dort eingegeben werden können. Derzeit kommerziell erhältliche mobile Empfänger zur Positionsbestimmung mit Navigationsfunktion und mit der Möglichkeit unkomplizierten Datenimports sind geeignet, solche Daten aufzunehmen und Menschen oder **Maschinen im Gelände bis hin zu ausgewählten Orten zu führen**. Spezialentwicklungen von geeigneteren Instrumenten zur Aufnahme der Zielkoordinaten und punktgenauen Navigation im Zielgebiet bis hin zum Zielobjekt bleiben vorbehalten.

Das Exportieren der Datei mit den Lagekoordinaten der ausgewählten Objekte hat in diesem Fall also den Sinn, Menschen oder Maschinen im Gelände mittels eines Navigationsinstruments an den Ort eines jeden ausgewählten Objekts zu navigieren. Vor Ort können dann die zu erledigenden Aufgaben ausgeführt werden. Solche **Aufgaben** können z.B. sein: Entnehmen des Objekts, Pflege- oder Reparaturarbeiten am Objekt (bei Bäumen z.B. Entfernen ungünstig geformter oder sich künftig qualitäts- oder wertmindernd auswirkender Baumteile, z.B. im Zuge der forstlichen Pflegemaßnahme «Wertästung») oder Vermessen des Objekts. Beliebige andere durch Menschen oder Maschinen auszuführende Maßnahmen sind denkbar. Zu den andern Maßnahmen, die im Gelände am zuvor bestimmten Ort auszuführen sein könnten, gehören z.B. Maßnahmen zur Ermittlung oder Verbesserung der Ertragsfähigkeit des Standorts (Bodenuntersuchungen, Düngungs- oder Meliorationsmaßnahmen des Bodens), planvolles Aufstellen von Gegenständen an zuvor ausgewählten Orten oder zielstrebiges Auffinden bereits im Gelände ausgebrachter Gegenstände, z.B. Monitorfallen für Schadinsekten und andere Tierarten.

**(Monitorfallen** sind Fangeinrichtungen, die zum Zweck der Ermittlung der lokal vorkommenden Tierarten und der Häufigkeit ihres Vorkommens innerhalb eines Zeitraums und eines Areals (Populationsdichte), mitunter auch zur Tötung der gefangenen Tiere, aufgestellt werden.)

In einem operationellen System wie dem hier beschriebenen kann der Datentransfer **bidirektional** erfolgen. Es können also nicht nur, wie oben beschrieben, Lagekoordinaten vom Computer mittels des Lagebestimmungsinstruments **in das Gelände** transferiert werden. Auch in der Gegenrichtung, vom Gelände **in den Computer**, ist der Datentransfer möglich. Somit können lagebezogene Informationen, die vor Ort im Gelände erhoben worden sind, in den Datenspeicher eines mobilen Aufnahmegerätes eingegeben und von diesem in einen anderen Computer an beliebigem Ort importiert werden.

**Lagebezogene Informationen** können z.B. qualitative oder quantitative Eigenschaften eines im Gelände untersuchten Objekts, am Objekt oder in der Umgebung eines Objekts vollzogene Maßnahmen, oder beliebige andere Informationen mit räumlichem Bezug sein. Lagebezogene Informationen am Beispiel eines einzelnen Baums können sein dessen Baumart, Baumdimensionen, Schäden am Baum, Qualitätsmerkmale oder beliebige andere Informationen über das Objekt. Lagebezogene Informationen am Beispiel einer Lücke, Blöße, Lichtung können sein deren Ursache (z.B. Baumverlust durch Holzernte, durch Windwurf, aufgrund Insektenbefalls), **Stadium der Neubesiedelung** (Sukzessionsstadium, z.B. Besiedelung erfolgt durch Arten aus dem Pflanzen- und/oder Tierreich, z.B. durch Flechten-, Farn-, Moos-, Krautpflanzen-, Tierarten), **Bodenart** und anderen **Standortcharakteristika.**

**Lagebezogene Informationen** sind dann auch (wie oben genannt) an einem Ort oder an einem Objekt bereits vollzogene oder künftig zu vollziehende **Maßnahmen**. Diese können z.B. deren Entnahme oder an ihnen vorgenommene Pflege-, Reparatur- oder Meliorationsarbeiten sein. Beliebige andere Informationen, die auf einen konkreten Ort, bestimmbar zumindest durch eine Raumkoordinate, bezogen werden können, sind denkbar.

Die vor Ort, im Gelände, erhobenen lagebezogenen Informationen können in Form von Zahlen, Buchstaben, Sprache oder in grafischer oder anderer Weise unter Raumbezug in das **mobile Datenaufnahmegerät** eingegeben werden.

Daten und Informationen, welche im Gelände erhoben und in das Erfassungssystem eingegeben worden sind (Geländedaten), können dort ggf. mit darin vorhandener Software beoder verarbeitet werden. Daten und Informationen, die mittels des Aufnahmesystems in einen anderen Computer importiert wurden, können dort in beliebiger Weise be- und verarbeitet werden. Sie können also z.B. in Datenbanken importiert oder mittels Analysesoftware ausgewertet werden. Analysesoftware kann jede geeignete Software sein. Besonders eignet sich die Integration in das durch Software operationalisierte Verfahren (Bezug: deutsche Wortmarke TREESCAPE) der älteren Anmeldung (101 60 179.4-52 Halbritter).

Falls erforderlich, werden die in den Computer importierten Daten aus dem speziellen Datenformat des Aufnahmegeräts in ein für die Weiterverarbeitung geeignetes Datenformat **konvertiert.**

Unter Bezugnahme auf die ältere Anmeldung (101 60 179.4-52 Halbritter) können die im Gelände gewonnenen Daten als **Vorwissen** oder als **Attribut- bzw. Ortsinformationen** in dem dort beschriebenen Verfahren (genannt **TREESCAPE)** eingesetzt werden, um an entsprechender Stelle Entscheidungen zu erleichtern, zu verbessern oder zu ermöglichen, wie weiter unten ausgeführt. Insofern stellt die vorliegende Anmeldung eine Weiterentwicklung, Erweiterung und Verbesserung des früher angemeldeten Verfahrens dar. Die ältere Anmeldung ist jedoch auch als Bestandteil der vorliegenden Anmeldung zu betrachten.

### Definitionen:

**Ereignis** bedeutet hier jede beliebige Änderung einer Variable gegenüber einem älteren Zustand.

**Impakte** (z.B. auf Baumbestände der Landschaft) sind hier definiert als jegliche Einflüsse auf mindestens eine Variable (z.B. auf die Höhe einzelner oder mehrerer Bäume) mit der Folge veränderter Eigenschaften, veränderter Position, Ausrichtung, Qualität, Dimension, Form, Gestalt, Gefüge etc. (z.B. Verringerung der Baumhöhe).

**Gefüge** (z.B. Bestandesgefüge) beschreibt die relative Position mindestens zweier Probanden mindestens einer Variable zueinander im Raum. Bei Betrachtung des Kronenraums eines einzelnen Baums kann z.B. das Gefüge seiner Äste innerhalb des Kronenraums Gegenstand der Betrachtung sein. Ist der Wald Kronenraums Gegenstand der Betrachtung, dann kann z.B. die räumliche Anordnung der Einzelbäume innerhalb des Untersuchungsgebiets zur Charakterisierung des Gefüges herangezogen werden.

Den **Kronen-, Stamm- und Wurzelraum sowie die nähere Umgebung** kennzeichnet die Bio-, Geo-, Pedo- und Atmosphäre im Beobachtungsgebiet mit allen Komponenten.

Das **Bestandesgefüge** ist zu sehen unter den fachlichen Aspekten horizontaler, vertikaler, längs- und querschnittweiser, schichtweiser, räumlicher oder anderer räumlicher Betrachtung.

Die **Biomasse** ist im vorliegenden Verfahren zu betrachten als punktweise, linienförmige, polygonale, eben-flächige, gewölbt-flächige, volumenhaft oder anders erfassbare oder darstellbare Bestandteile des Untersuchungsgebietes (Raumkomponenten) beliebiger Komplexitäts- oder Vereinfachungstufe, sowohl als Einzelobjekt(e) wie auch als räumlich angeordnete Vielzahl von Objekten in einem Objekt- oder Merkmalsraum.

Die **Biomasse** umfasst sämtliche Organismen im Beobachtungsbereich.

Die **Biosphäre** umfasst sämtliche im Beobachtungsgebiet vorhandene Organismen und den Raum, in welchen sie eingebettet sind.

Die **Geosphäre** umfasst sämtliche Komponenten der geologischen Merkmale im Beobachtungsgebiet.

Die **Pedosphäre** umfasst sämtliche organischen, mineralischen, wässrigen, gasförmigen und anderen Komponenten des Bodens im Beobachtungsgebiet.

Die **Atmosphäre** umfasst den nicht von Organismen, Boden, Gestein, Gewässer, Bauwerken und anderen Objekten oberhalb des Erdbodens ausgefüllten übrigen Raum des Beobachtungsgebietes.

Die **Vegetation** umfasst alle Pflanzen, auch Flechten, Pilze und andere nichttierische Organismen.

Die **Waldvegetation** umfasst alle pflanzlichen Organismen, Holzpflanzen und Nichtholzpflanzen, welche typisch für Wälder oder waldähnliche Baumbestände des Beobachtungsgebietes sind.

Die **Agrarvegetation** umfaßt alle pflanzlichen Organismen, die landwirtschaftlich genutzt werden.

Die **Tierarten** umfassen alle nichtpflanzliche Organismen.

Die **Tierarten des Waldes** umfassen alle tierischen Organismen, deren typischer Aufenthaltsraum überwiegend, dauernd oder temporär, Wälder oder waldähnliche Baumbestände des Beobachtungsgebietes sind.

Die **Tierarten der Agrarlandschaft** umfassen alle tierischen Organismen, deren typischer Aufenthaltsraum überwiegend, dauernd oder temporär landwirtschaftlich genutzte Pflanzenbestände des Beobachtungsgebietes sind.

**Fernerkundung** ist jedes Verfahren zur Beobachtung von Objekten ohne dabei mit diesen in Kontakt zu kommen.

Die **Oberfläche der Vegetation** ist zu verstehen als die Grenzfläche zwischen der Vegetation und anderen Medien, v.a. der Atmosphäre.

**Ort der Originalstichprobe:** Ist der zu analysierende Datensatz die Gesamtheit der Informationen, die in den Zellen eines zellenweise mit Werten besetzten *Rasters* (z.B. ein Bild, Spektralbild, Höhenbild, Abstandsbild) liegen, dann ist der «Ort der Originalstichprobe» im Rasterdatensatz eine einzelne Zelle des Rasters. Ist der zu analysierende Datensatz die Gesamtheit der Informationen, die auf den Punkten eines *Punktfeld* liegen, dann bezeichnet «Ort der Originalstichprobe» einen einzelnen Punkt. Ist der zu analysierende Datensatz die Gesamtheit der Informationen, die innerhalb eines *Flächenelements* liegen, dann bezeichnet «Ort der Originalstichprobe» das ganze Flächenelement. Ist der zu analysierende Datensatz die Gesamtheit der Informationen, die innerhalb eines *Volumenmodells* liegen, dann bezeichnet «Ort der Originalstichprobe» ein einzelnes Volumenelement.

Relevant ist dieser Begriff einerseits um den am «Ort der Originalstichprobe» ermittelten und gespeicherten Wert zu *lesen* und andererseits um das Resultat einer Berechnung dorthin zu *schreiben.*

**Charakteristik** ist der weitest denkbare Begriff dieser Definitionsliste für einen Sachverhalt, der mit einem einzelnen oder mehreren Obj ekten so in Zusammenhang steht, dass er allein oder mit Hilfe weiterer Sachverhalte dazu beiträgt, dass das betrachtete Objekt unter den Aspekten der Auswertung klassifiziert werden kann.

**Kriterium** ist eine Vorbedingung, damit eine Entscheidung getroffen werden kann.

**Merkmal** ist ein Sachverhalt, der untrennbar zu einem Objekt gehört, es charakterisiert und klassifizierbar macht oder mit einem Objekt in eindeutigem Zusammenhang steht oder in irgend einer Weise signifikant verbunden ist.

**Parameter** ist ein Thema aus den Anliegen des Auswerters, das anhand einer oder mehrerer Variablen automatisch quantifizierbar wird.

**Variable** können *Primärvariablen* oder *abgeleitete* Variablen sein. Primärvariablen sind Variablen, die direkt aus dem Datensatz gebildet und mit Werten belegt werden können. Abgeleitete Variablen können *Sekundärvariablen* oder *Variablen höherer Ordnung* sein. (wobei Sekundärvariablen - s.u. - Variablen sind, die ohne Zuhilfenahme von exogenem Wissen aus dem Datensatz gebildet und mit Werten belegt werden können. Variablen höherer Ordnung sind Variablen, die durch Zuhilfenahme von exogenem Wissen aus dem Datensatz gebildet und mit Werten belegt werden können.)

**Primärvariablen** sind solche Variablen, welche direkt und unmittelbar aus dem analysierten Datensatz mit einem oder mehreren Werten belegt, also z.B. identifiziert, lokalisiert, segmentiert, gezählt, vermessen werden können.

**Abgeleitete Variablen, Sekundärvariablen, Variablen höherer Ordnung** sind solche Variablen, welche nur indirekt und ggf. unter Zuhilfenahme weiterer Daten oder Kenntnisse, möglichst, jedoch nicht zwingend, aus dem analysierten Datensatz mit einem oder mehreren Werten belegt, also z.B. identifiziert, lokalisiert, segmentiert, gezählt, vermessen werden können. Um einer abgeleiteten Variablen einen Wert zuordnen zu können, werden typischerweise Datenbankbestände, Listen oder Referenztabellenwerte mit Hilfe von Verknüpfungen oder Statistiken, Regressionen, Korrelationen o.ä. mit einer oder mehreren Primärvariablen in Bezug gesetzt mit dem Ziel, aus anderweitig bekannten oder ermittelbaren Quellen hinreichende Informationen zu aktivieren, damit mit dem eigentlichen Parameter (der anhand einer oder mehrerer Variablen quantifizierbar ist) mit ausreichend hoher Wahrscheinlichkeit eine für das Untersuchungsziel relevante Aussage abgegeben werden kann.

### Technische Beschreibung des Verfahrens

Grundlage des hier beschriebenen Verfahrens sind zumindest folgende Arten von digitalen Datensätzen:
a) digitales morphographisches Oberflächenmodell der Vegetation (und ggf. der Bauwerke) im Beobachtungsgebiet (digitales Oberflächenmodell **DOM).** Das DOM ist vorzugsweise ein äquidistantes orthogonales Raster von Oberflächenhöhenmessungen im Untersuchungsgebiet, wie es z.B. durch Laserscanning (LIDAR) aus der Luft, durch photogrammetrische Rekonstruktion der Oberflächengestalt der Landschaft (des Geländes und aller sich oberhalb befindlichen natürlichen und künstlichen Objekte) aus Stereoluftbildern, durch Mikrowellenfemerkundung oder auf anderem Wege erstellt wurde.
b) digitales morphographisches Oberflächenmodell der Erdoberfläche des Beobachtungsgebietes (digitales Geländemodell **DGM**). Wie das DOM ist auch das DOM vorzugsweise ein äquidistantes orthogonales Raster von Oberflächenhöhenmessungen im Untersuchungsgebiet. Anders als beim DOM ist im DGM nur die Erdoberfläche ohne jegliche darauf oder darüber befindliche Objekte rekonstruiert.
c) spektrale oder multispektrale Abbildung des Beobachtungsgebietes (orthogonalisierter Spektraldatensatz, Orthobild **OB**), v.a. mit Sensibilität in denjenigen Bereichen des elektromagnetischen Spektrums, in welchen Vegetation gut differenzierbar ist (z.B. im nahen, so genannten «reflektierten», Infrarotbereich, Literatur siehe HILDEBRANDT 1997) (Spektraldatensatz Orthobild nahes Infrarot **OB-nIR**). Als OB bzw. OB-nIR kommen in Betracht z.B. (von Stativen, Türmen oder aus Flugzeugen, Helikoptern, Satelliten, Raumschiffen o.ä. Plattformen mit optischen, elektronischen, optoelektronischen oder mit anderen zweckmäßigen Techniken aufgezeichnete) Bilder, Luftbilder, Satellitenaufnahmen oder andere digitale oder analoge Fernerkundungsaufzeichnungen.

Die Potenziale des vorgestellten automatisierten Verfahrens legen es nahe, die Resultate der Auswertungen auf Grundlage der Primärvariablen nicht einfach als Endergebnisse zu betrachten, sondern diese Resultate mit weiteren Daten und Informationen in Bezug zu setzen. Die Bezüge zwischen den Primärvariablen und den mit diesen verknüpften Daten und Informationen sollen sich aus den Anliegen des Auswerters bzw. Auftraggebers ergeben. Daher ist grundsätzlich denkbar, jedes Resultat mit jedem anderen, aber auch mit jedem beliebigen anderen endogenden oder exogenen Sachverhalt in Bezug zu setzen. Grenzen der Verknüpfungen setzen die Auswerter bzw. deren Auftraggeber aufgrund fachlicher Plausibilität und Relevanz im Rahmen anerkannter Gesetzmäßigkeiten. Letztendlich entscheidet das Experiment darüber, welche Zusammenhänge sinnvoll und welche nicht sinnvoll sind. Grundsätzlich sollte keine vergleichende Betrachtung von vorne herein als abwegig betrachtet werden. Das Verfahren sieht es vor, jegliche Daten und Informationen zu **importieren** und innerhalb des Analysesystems mit jeglichen anderen Daten und Informationen in frei definierbare Zusammenhänge zu setzen und auf beliebige Weise zu analysieren. Auch sieht das Verfahren vor, die intern erzeugten Daten und Informationen zu **exportieren**, damit sie in anderen Umgebungen weiter verwendet werden.

Grundsätzlich verläuft das Verfahren wie folgt:
1 a. Subtraktion des digitalen Geländemodells DGM vom Oberflächenmodell DOM. *Resultat:* das digitale Vegetationsoberflächenmodell dVOM (*Voraussetzung:* beide Datensätze sind vollständig und mit orthogonal und äquidistant verteilten Höhenstichprobepunkten ausgestattet, oder sie können mit vertretbarem Aufwand und mit akzeptablen Resultat mit gleichen Abständen orthogonalisiert bzw. komplettiert oder korrigiert werden, oder sie können trotz beträchtlicher Heterogenität zueinander in hinreichenden räumlichen Bezug gebracht werden. *Option:* sofern die vorliegenden Daten nicht je Lagekoordinate nur eine einzige Höhe enthalten, sondern mehrere, gilt dennoch der Begriff "Oberflächenmodell"; dann jedoch lägen nicht sogenannte 2,5D-Daten vor, sondern 3D-Daten, auch wenn die Höhenintervalle der Höhenstichproben je Ort nicht gleiche Beträge haben.)
1 b. geometrische Verknüpfung eines oder mehrerer Ortho-Spektralbilder OSB mit dem dVOM. Dabei verbleibt das OSB in seiner Originalauflösung, d.h. es wird weder verkleinert noch vergrößert, damit die Originalinformationen nicht beeinträchtigt werden. Bei der (visuellen oder virtuellen) Überlagerung mit dem dVOM wird das dVOM auf die Geometrie des OSB registriert. Erst der resultierende Datensatz kann ggf. skaliert werden. Vorzugsweise enthält zumindest ein OSB Informationen zur Differenzierung der Pflanzenarten (v.a. im nahen Infrarot). Ein OSB mit hohem Informationsgehalt über die Standorteigenschaften (z.B. im mittleren Infrarot, im Thermalinfrarot, in einem Mikrowellenband) kann hinzugezogen werden. Weitere OSBs mit anderen Informationsgehalten können optional verknüpft werden. Deren (Standard- oder Spezial-) Interpretations- bzw. Klassifikationsschlüssel sind im Analysesystem abgelegt und bei den Analysen verfügbar. *Beispiel:* Ein Standard-Klassifikationsschlüssel für die Klassifikation eines Baums in entweder Laubbaüm oder Nadelbaum enthält die digitale kodierte unscharfe (*fuzzy*) Information "je niedriger der Reflexionswert im nahen Infrarot in' einem Bildelement, welches innerhalb eines Baumkronenpolygons liegt, desto wahrscheinlicher gehört die Baumkrone zu einem Nadelbaum" bzw. "je höher der Reflexionswert im nahen Infrarot in einem Bildelement, welches innerhalb eines Baumkronenpolygons liegt, desto wahrscheinlicher gehört die Baumkrone zu einem Laubbaum".
2. Import von nützlichen Daten und Informationen, welche als Vorwissen in die Analysen einbezogen werden können. In der Software erfolgt dies vorwiegend durch unscharfe Wertebereiche, damit der Fachauswerter vom Druck befreit wird, vorhandenes Erfahrungswissen ausschließlich durch einen oder einige wenige scharfe Werte eingeben zu können. *Nutzeffekt:* jegliches Vorwissen, auch solches, das kaum oder nur unter erheblichem Aufwand mit scharfen Werten zu belegen wäre, kann im beschriebenen Verfahren in die Analysen einbezogen werden. *Erläuterung:* In der Praxis scheut der Auswerter aus ökonomischen Gründen oft die Beschaffung von präzisen Daten und Informationen. Kann er jedoch sein Erfahrungswissen -sei es noch so unscharf und beruht es nur auf relativen Größenordnungen - so eingeben, dass dies ihm kaum Mühe bereitet, dann ist er geneigt, auch solche Informationen in die Analyseprozesse einzubringen, welche er ohne eine solche Möglichkeit nicht oder nur ungern dokumentieren würde. *Umsetzung:* Die Software, welche das Verfahren umsetzt, greift (für den Auswerter grundsätzlich unsichtbar) an Stellen auf solches Vorwissen zu, wo solches Vorwissen die nachfolgenden Arbeiten erleichtern würde. Liegt kein Vorwissen vor, dann arbeitet die Software an einer solchen Stelle so weiter, dass von Normal-, Tabellen- oder Referenzwerten ausgegangen wird. Entsprechende Tabellen sind in der Software integriert. Beispiele der Quellen solcher Referenzwerte: Hilfstafeln für die Forsteinrichtung, Richtlinien zur Waldbewertung, Beschreibungen von (forstlichen) Wuchsgebieten und Wuchsbezirken, Kartierschlüssel für Biotoptypen, Leitfaden zur Forstlichen Rahmenplanung, Leitfaden zur Kartierung der Schutz- und Erholungsfunktionen des Waldes (Waldfunktionenkartierung), eigene Erhebungen, eigene Erfahrungen u. a.
3. Analyse des resultierenden Datensatzes unter Einsatz der angemeldeten Methoden und unter Berücksichtigung vorhandener Daten und Informationen (siehe Schritte 2, 4, 5 und 6)
4. Sichern der Resultate in Dateien, erforderlichenfalls mit Listen- oder Datenbank-Charakter
5. Zurverfügungstellen der Resultate an anderen Stellen des Verfahrens durch Verknüpfen der Resultate in Schritt 4 mit jenen anderen Stellen, wo diese Resultate sinnvoll verwendet werden können (siehe Schritt 6)
6. Berücksichtigung der bereits vorhandenen Daten und Informationen (früher erzeugte Resultate aus dem Verfahren der Schritte 4 und 5 oder Vorwissen aus Schritt 2) an anderen Stellen des Verfahrens (siehe Schritt 3) zur Erleichterung der dortigen Berechnungen oder zur Verbesserung der Teilergebnisse eines Verfahrensmoduls
7. Erzeugen der gewünschten alphanumerischen oder grafischen Resultate als Soft- oder Hardcopies
8. Verifikation der Resultate
9. Fehleranalysen
10. Ableitung von Korrekturfaktoren aus den Fehlerstudien
11. Integration der bestmöglichen Korrekturfaktoren an entsprechenden Stellen in den Analyseprozess (im operationellen System: in den Quellcode) - der Auswerter muss dies nur bddenken, wenn er eigene Korrekturfaktoren definieren möchte.
12. Bei der Visualisierung der Ergebnisse der Analysen können die Resultate der Module grafisch auf dem DGM platziert dargestellt werden.
13. Bei Bedarf können die Resultate aus der Quell-Analyseumgebung exportiert und in anderen Analyseumgebungen verwendet werden.

### Arbeitsschritte

### I.

### Vorbereitung

### Erster Schritt: Subtraktion DOM - DGM

Die Höhen des digitale Geländemodells **(DGM)** werden vom digitalen Oberflächenmodell der Vegetation **(DOM)** subtrahiert. Sind die Original-Messorte beider digitaler Modelle nicht lagekongruent, dann sind die Orte der Höhenmessungen (Höhenstützstellen) beider Höhenmodelle zuvor aufeinander abzustimmen. Hierzu geeignete Verfahren zur räumlichen Interpolation sind bekannt.

**Resultat** der Vorbereitung ist das digitale Vegetationsoberflächenmodell **(dVOM).**

Das **dVOM** wird definiert als eine digitale räumliche Rekonstruktion der Oberfläche derjenigen Landschaftsbestandteile (als Einzelobjekte oder als Gesamtheit), welche sich oberhalb der Erdoberfläche (bzw. oberhalb des Geländeniveaus) befinden.

Oberhalb der Erdoberfläche können sich belebte und unbelebte Objekte, natürlich entstandene und künstliche, von Menschen geschaffene (anthropogene Objekte) befinden. Für die vorliegende Problemstellung interessiert in erster Linie die Oberfläche überirdischer Pflanzenteile. Damit ist gemeint: überirdische Pflanzenteile vorwiegend der terrestrischen Vegetation, jedoch auch derjenigen Vegetation, deren Wurzeln und Teile der Stiele/Stämme, der Äste/Zweige, des Laubes oder anderer Komponenten sich nicht oder nicht ausschließlich oberhalb, sondern unterhalb der Oberfläche eines stehenden oder fließenden Gewässers (Süß-, Salz-, Brackwasser oder Wasser anderer chemischer Differential-Charakteristika) befinden können (z.B. Mängrovehpflanzen).

**Nächster Schritt:** binäre Klassifikation des Datensatzes des **dVOM** in (a) Punkte (Höhenstichprobepunkte), die auf der Vegetation liegen und (b) Höhenstichprobepunkte, die auf dem Geländeniveau (Waldboden) liegen. Jeder Punkt erhält also eines der beiden möglichen Attribute: a) Vegetation oder b) Nicht-Vegetation (Lücken im Pflanzenbestand, Bestandeslücken).

Lokalisieren der Höhenmessorte im **dVOM,** welche deutlich' unterhalb des Kronendachniveaus in Bodennähe liegen, mit Höhen von *h*= *0m* oder geringfügig darüber (auf der Oberfläche von niedrigen Pflanzen, z.B. auf Pflanzen der Kraut- oder Strauchschicht gelegen).

**Verfahren:** Wie in der älteren Anmeldung (101 60 179.4-52 Halbritter) beschrieben. Dabei ist zu betonen, dass die Höhen in Bestandeslücken nicht zwingend *h*= *0m* betragen müssen, sondern lediglich deutlich unterhalb der meisten übrigen Höhen in Bodennähe liegen. Als Ort einer Bestandeslücke gilt also nicht ausschließlich ein solcher Höhenmesspunkt, welcher auf dem vegetationsfreien Waldboden liegt Auch wenn der Messpunkt auf der Oberfläche bodennaher Pflanzen von relativ geringer Höhe liegt, deren Existenz jedoch unbedeutend für die Untersuchung ist, wird durch ihn eine Lücke im Kronendach des Hauptbestandes angezeigt.

**Resultat:** Digitale Datei mit dem binär kodierten Datensatz «Messpunkt liegt entweder auf dem Boden oder darüber» (Für Vegetation: Ein Punkt liegt entweder auf dem Kronendach ODER er liegt auf einer Lücke im Kronendach). Alle Höhenmessorte werden zwei Klassen zugeordnet: Punkte, welche auf der Waldoberfläche liegen und Punkte, die in deren unbestockten Zwischenräumen liegen.

**Nächster Schritt:** Extraktion der Bodenpunkte (z.B. Lücken im Pflanzenbestand) aus dem Datensatz. Sichern der Koordinaten dieser Punkte in eine Rasterdaten-Datei **(boden_R).**

**Nächster Schritt:** Vektorisierung: Aus der vorangehend benannten Datei wird ein weiterer Datensatz extrahiert, in dem nur die Grenzpolygone der Gruppen derjenigen Höhenmessorte enthalten sind, die in den unbestockten Zwischenräumen des Kronendaches liegen. Die Grenzpolygone sind Außenränder und Innenränder der Flächen, deren Höhen Bodenniveau haben oder dem Bodenniveau gleichgesetzt werden. Sie sind in der Datei definiert durch die räumlichen Koordinaten der Stützstellen (Vertices) des Umfang-Polygonzugs. Die resultierende Vektordaten-Datei (**boden_V**) wird gesichert.

**Nächster Schritt:** Maskieren des **dVOM** mit dem Datensatz **boden_R oder boden_V.**

**Resultat:** Digitale Datei, in welcher diejenigen Rasterelemente aus dem dVOM ausgefiltert wurden, die nicht auf Waldbaumkronen liegen. Zurück bleibt ein dVOM, in welchem ausschließlich das Kronendach repräsentiert ist (**dVOM_K**). Später können weitere Datensätze mit diesen maskiert und die Analyseresultate durch Ausfiltern störender Information oder von (i.S. der Signalverarbeitung) Rauschen verbessert werden.

**Nächster Schritt:** Lokalisieren der lokalen *Höhenminima* im **dVOM**

**Verfahren:** Lokale Höhenminima sind alle Höhenmeßorte, in deren unmittelbarer Nachbarschaft keine tiefer gelegenen Höhenmessorte vorhanden sind. Sie dienen zur Ermittlung von Sattelpunkten zwischen benachbarten Kronen, also den Stützstellen zur Rekonstruktion des Kronenrandes (des Umfangpolygons der Lichtkronenbasis) einzelner Bäume im Oberflächenmodell aus Morphologiedaten.

*Output:* digitale Datei der lokalen Höhenminima

**Nächster Schritt:** Segmentierung des dVOM I: Extraktion der Umfangpolygone des Kronenrandes an der Lichtkronenbasis einzelner Bäume.

Verfahren: Die zu einem Baum gehörenden lokalen Höhenminima werden miteinander so verbunden, dass sich ein geschlossener Polygonzug ohne Kreuzungen ergibt.

*Output:* digitale Datei der vorläufigen Baumkronenprojektionen als Umfangpolygöne des Kronenrandes an der Lichtkronenbasis einzelner Bäume, ermittelt durch diese Methode (**Proj_IMin.**)

Nächster Schritt: Segmentierung des dVOM II: Siehe Anhang: Segmentierung

*Output:*digitale Datei der vorläufigen Baumkronenprojektionen Typ II als Umfangpolygone des Kronenrandes an der Lichtkronenbasis einzelner Bäume, ermittelt durch diese Methode **(Proj_Segment)**

**Nächster Schritt:** stichprobenweise Überprüfung der Qualität der Segmentierungsergebnisse visuell auf dem Bildschirm und/oder anhand von Referenzbäumen in der Realität - und ggf. Korrektur der Extraktion der Einzelbaumpolygone

*Output:* digitale Datei der Baumkronenprojektionen als Umfangpolygone des Kronenrandes an der Lichtkronenbasis einzelner Bäume, ermittelt durch diese Methode **(KrProj_vorl)**

**Nächster Schritt:** Sicherung der resultierenden realitätsnächsten Polygone (Umfangpolygone der segmentierten Pflanzen) als Vektordatensätze (Polygonzüge, definiert durch die x/y-Koordinaten deren Knotenpunkte, Vertices, welche zur Visualisierung miteinander durch Geraden oder Kurven verbunden werden) in eine digitale Datei **(KrProj)**

**Nächster Schritt:** Vorbereitung des Spektraldatensatzes (**OB-nIR_roh**), also der spektrometrischen Abbildung (Spektralbild, z.B. Luftbild, Satellitenbild) des Untersuchungsgebietes, v.a. dessen Reflexionscharakteristika im nahen (reflektierten) Infrarot. Eine Verbesserung der Eigenschaften des Spektraldatensatzes mit Methoden der digitalen Bildverbesserung kann vorangehen. Hierzu geeignete Verfahren sind bekannt.

**Nächster Schritt:** Sicherung des qualitätsoptimierten Spektraldatensätzes in eine digitale Datei **(OB-nIR)**

**Nächster Schritt:** Vorklassifikation des Spektraldatensatzes (**OB-nIR**) unter Aspekten der Pflanzenartenerkennung

Erste Klassifikation des Spektraldatensatzes mit den zum jeweiligen Stand der Technik bekannten Methoden der digitalen Bildverarbeitung. Zwei Varianten: a) unüberwachte Klassifikation mit relativ wenigen Klassen b) überwachte Klassifikation anhand einer angemessenen Auswahl von Pflanzen von mit hoher Gewissheit bekannten Baumarten. Nur sehr gute Klassifikationsergebnisse werden in digitale Dateien gesichert und in den folgenden Schritten verwendet. Führte diese Klassifikation zu keinem gesichert gutem Ergebnis, so werden die Ergebnisse dieses Schritts in den folgenden Schritten nicht weiterverwendet.

Die Klassen, denen die Matrixelemente zugeordnet werden können sind zumindest: (a) Laubbaumcharakteristik, (b) Nadelbaumcharakteristik, (c) nicht eindeutig zuzuordnen. Je nach Auswertungsziel und Datenqualität können Differenzierungen hinzukommen, z.B. Krone verlichtet, Krone Dicht belaubt, Baum fruktifizierend, Laub chlorotisch oder anders verfärbt.

*Output:* digitale Orthophotokarte (Matrix aus Elementen mit spektralen Reflexionswerten, v.a im nahen Infrarot) und digitale Karte der Klassifikationsergebnisse (Matrix aus Elementen mit Klassenbezeichnung)

**Nächster Schritt:** Kongruente Überlagerung: Registrierung der verschiedenen zum Maskieren oder Filtern geeigneten Datensätze vom Typ "digitales Waldoberflächenmodell" aufeinander (dVOM_x, dVOM_K, KrProj, OB-nIR) in einem einheitlichen Koordinatensystem h(x, y)

Verfahren: Auf dem Bildschirm kann zwischen den Modellen gewechselt werden.

*Output:* Möglichkeit von Vergleichen, der visuellen Plausibilitätskontrolle und Fehlersuche und -korrektur

**Nächster Schritt:** Maskieren des Orthospektralbildrasters mit dVOM_K und KrProj. Ausschluss derjenigen Bildelemente des OB-nIR, welche außerhalb von Einzelpflanzenpolygonen liegen; Speichern des resultierenden gefilterten reduzierten Datensatzes (**OB-nIR_filt**) in eine Datei; Klassifikation des gefilterten reduzierten Datensatzes (OB-nIR_filt) mit Methoden der Klassifikation digitaler Bilder unter Aspekten der Differenzierung der Pflanzenarten (Literatur z.B. HILDEBRANDT, JAHNE, HABERÄCKER); Überprüfung der Qualität des Klassifikationsergebnisses und ggf. Korrektur

*Verfahren:* die bestmögliche Datei der Baumkronenumfangspolygone dient zur Maskierung des Orthobildes. Alle Bildelemente, die außerhalb geschlossener Baumkronenumfangspolygone liegen, werden ausgefiltert und gehen nicht in die anschließende Klassifikation des Spektraldatensatzes ein. Die Bildelemente, welche innerhalb geschlossener Baumkronenumfangpolygone liegen, werden untersucht mit dem Ziel der Baumartenerkennung. Sofern geeignete spektrale Signaturdatenbanken vorliegen, werden diese eingesetzt. Andernfalls werden die Baumkronen nur groben Klassen zugeordnet. Die Klassen, denen die Matrixelemente zugeordnet werden können sind zumindest (s.o.): (a) Laubbaumcharakteristik, (b) Nadelbaumcharakteristik, (c) nicht eindeutig zuzuordnen. Je nach Auswertungsziel und Datenqualität können Differenzierungen hinzukommen, z.B. Krone verlichtet, Krone Dicht belaubt, Baum fruktifizierend, Laub chlorotisch oder anders verfärbt.

*Output:* Reduzierter Datensatz (OB-nIR_filt), dessen Klassifikationsgenauigkeit bei der automatischen Klassifikation mit Methoden der digitalen Bildverarbeitung dadurch erhöht wurde, dass Bildelemente, welche außerhalb der gut vom Sonnenlicht ausgeleuchteten Bereiche des Kronendachs liegen, vor der Klassifikation ausgefiltert worden sind. Die Klassifikation der Bäume in zumindest die beiden Klassen «Laubbaum» oder «Nadelbaum» wird somit maximal verbessert, so dass Verfahren automatischer digitaler Bildauswertung auch auf digitale Orthobilder mit hoher geometrischer Auflösung sinnvoll angewendet werden können.

(In Bildern von Oberflächen mit großer Rauigkeit liegen zahlreiche Bildelemente im Schattenbereich von benachbarten Objekten. Die Grauwertfrequenzen sind u.U. relativ hoch und sind nicht immer systematisch verteilt. Hieraus ergeben sich geradezu chaotische Muster, Texturen und Strukturen, die für Klassifikationen nicht ideal sind und Klassifikationen beeinträchtigen können. Dadurch sind die spektralen Reflexionswerte der Pixel großmaßstäbiger Bilder für automatische Klassifikationen eher ungeeignet. Die oben beschriebene Maskierung ermöglicht Genauigkeitssteigerungen bei der automatischen Artenerkennung selbst bei großmaßstäbigen Ortho-Spektralbildern.

**Nächster Schritt:** Speichern des Klassifikationsergebnisses: wahrscheinlichste Baumart oder Baumartengruppe eines jeden Einzelbaumpolygons

Verfahren: Jedem Kronenpolygon wird die wahrscheinlichste Baumart oder Baumartengruppe als Attribut zugeordnet

**Output:** digitale Datei mit den nach Baumart klassifizierten Baumkronenpolygonen

Nächster Schritt: Verknüpfen des Klassifikationsergebnisses "Pflanzenart eines jeden Einzelpflanzenpolygons" mit dem Ergebnis der Ermittlung des Kronenmorphotyps. Der Morphotyp einer Krone wurde definiert und erstmals beschrieben bei der neuen Methode des lokalen Formfittings (siehe 101 60 179.4-52 Halbritter).

Eine neue, gegenüber der älteren Anmeldung differenziertere Methode zur Ermittlung des Kronenmorphotyps wird im Anhang beschrieben. Folgende Mörphotypen werden nun klassifiziert und mittels ihrer Bestimmungsparameter vermessen: Kegel, Ellipsoid, Paraboloid, Kugelkalotte, Komposite aus Flanken- und Kappen-Fit. Weitere Differenzierungen sind leicht möglich, indem andere Kurven angeschmiegt werden. Besonders die Komposite ist bei klüftigen, unregelmäßig geformten Kronen flexibel, weil Kronenmantel und Kronenwipfel (Kronen-Akron) durch verschiedene Funktionen approximiert werdden können.

Verfahren: siehe 101 60 179.4-52 Halbritter und Anhang der heutigen Zusatzanmeldung

Output: jedem Kronenformprimitivum (z.B. Kegel/ Ellipsoid/ Paraboloid/ Kugelkalotte/Komposite) sind zugeordnet die Bestimmungsparameter der lokal angefitteten Hohlform (rotierte Kurve, rotierte Funktion): Pflanzenhöhe, Lichtkronenlänge (siehe 101 60 179.4-52 Halbritter), Morphotyp, Durchmesser der Kronenbasis (Kronenbasisdurchmesser), Formparameter der Kronenbasis (Polygoncharakteristik der Kronenprojektion/des Einzelpflanzenpolygons, siehe 101 60 179.4-52 Halbritter). Weitere Variablen sind denkbar.

**Nächster Schritt:** Archivieren der baumbezogenen Attribute in Listen und Datenbanken für Nutzung als Resultate oder zur Weiterverwendung in anderen Analysemodulen

Verfahren: Für jedes Einzelpflanzenpolygon existieren nun wichtige Informationen, v.a. Pflanzenart, Kronenmorphotyp, Dimensions- und Formparameter des Lichtkronenbasispolygons (der Kronenprojektion) u.a.

*Output:* Listen, Datenbanken, in systematischer Ordnung mit sprechenden Dateinamen archiviert

**Nächster Schritt:** Statistische Auswertung der Resultate (Zählung der Klassen, Zählung der Individuen je Klasse, Analysen der räumlichen Verteilung der Individuen und der Klassen im Untersuchungsgebiet, Inbezugesetzen der Resultate zu anderen Beobachtungen der Phyto-Zoo-, Pedosphäre sowie anderen Beobachtungen). Weiterverarbeitung der neuen Informationen nach Belieben innerhalb oder außerhalb des Verfahrens.

### B. Vereinzelung, Identifizierung, Segmentierung, Rekonstruktion, Lokalisierung und Charakterisierung einzelner Objekte im dVOM

Wichtig für die folgenden optionalen Modellierungen, Manipulationen und Simulationen ist die Auflösung der quasi kontinuierlichen digitalen Vegetationsoberfläche (dVOM) in einzelne Objekte. Diese sind dann einzeln addressierbar und können, z.B. durch Mausklick, entnommen oder verändert werden.

Es kann interessant sein, wenn die gefitteten Hohlformen nicht eine ellipsoide (oder kreisförmige) Basisfläche haben, sondern auf das ermittelte Baumkronenumfangpolygon aufgesetzt werden.

**Erster Schritt:** Resultate des lokalen Formfittings verwenden

Zuordnen der Information "Pflanzenart (Wahrscheinlichkeit n%) und Kronenmorphotyp und Dimensions- und Formparameter der Kronenprojektion" und "Kronenmorphotyp"

**Nächster Schritt:** Geometrie der Basis des Kronenprimitivums an die Form und Dimension des jeweiligen Kronenprimitivums anpassen

*Output:* digitale Datei **Kronenprimitivum_Basisadapt**

**Nächster Schritt:** der Vegetationsbestand wird neu zusammengesetzt aus dem neuen Primitivum-Typ "Kronenprimitivum_Basisadapt'

*Verfahren:* An Stelle des Ausschnitts des 2,5D- **dVOM,** an welchem eine Krone identifiziert und charakterisiert wurde, wird nun dasjenige Primitivum gesetzt, das in Form und Gestalt sowie in den Dimensionen seiner Mantelfläche, seines Wipfels, seiner Lichtkronenbasis, seiner Lichtkronenlänge und seines Lichtkronenvolumens der Realität am nächsten kommt.

*Output:* digitale Datei und räumlich visualisiertes Modell des Pflanzenbeständes ("Modell_Kronenprimitivum_Basisadapt").

Dieses Modell ähnelt zunächst 2,5D- **dVOM.** Unterschied: anders als im **dVOM** ist jedes Einzelmodell singulär und kann als Einzelobjekt betrachtet und behandelt werden. Wird es ausgewählt und entnommen, dann können an seiner Stelle alle Rasterelemente mit der Höhe *h*= *0m* belegt werden. Damit kann dann z.B. eine Entnahme oder ein Verlust infolge eines Schadens simuliert werden. Es trägt zudem Attribute wie "wahrscheinliche (n%) Pflanzenart, Morphotyp, Höhe über Boden, Durchmesser, Formparameter, Gestaltparameter". Räumlich eindeutig definiert ist es durch die Koordinaten (Ostwert und Nordwert) von geometrischem Schwerpunkt, Vertices des Umfangpolygonzugs, Lage des lokalen Höhenmaximums innerhalb des Kronenpolygons, Flächenschwerpunkt des Kronenpolygons, räumlich interpolierten Punkten etc.

### C. Auswählen einzelner Objekte oder von Objektgruppen am Bildschirm und Sichern der Lagekoordinaten in eine digitale Datei

Am Bildschirm kann nun jede Einzelpflanze (Einzelobjekt) ausgewählt werden anhand der Koordinate eines Punktes innerhalb des Polygons oder durch Mausklick. Das ausgewählte Objekt erhält zur Verdeutlichung eine zuvor ausgewählte Farbe (Voreinstellung z.B. gelb). Es können beliebig viele einzelne Objekte auf diese Weise ausgewählt werden. Mehrere Objekte können gruppiert und als Unterdatensatz weiter behandelt werden.

### Erster Schritt: Auswahl von Objekten (Einzelpflanzen/Pflanzengruppen)

**Nächster Schritt:** Im folgenden Schritt erfolgt die Anweisung, was mit diesen ausgewählten Objekten geschehen soll. Optionen: Kopieren in die Zwischenablage, Entfernen und Speichern in der Zwischenablage, Löschen.

Die Möglichkeit besteht, zuvor eine Datei bereitzustellen, in welche die Daten (alle Koordinaten und Attribute) der selektierten Objekte nach Kopieren oder Entfernen gesichert werden. Ansonsonsten erhält der Auswerter Gelegenheit, der neuen Datei einen Namen und Pfad zuzuteilen.

**Nächster Schritt:** Neuerstellen einer Datei. Bennennen der Datei und des Pfades in der Verzeichnishierarchie Diese neu angelegte Datei erhält durch den Pfad und Dateinamen optional automatisch alle notwendigen und hinreichenden Informationen des Projekts, des Untersuchungsgebiets (Bestandes-Nummer o.ä.) etc. Sie werden aus den Voreinstellungen übergeben.

Die Möglichkeit besteht dann, diese Datei auf dem Monitor anzuzeigen, zu drucken, zu bearbeiten etc.

**Nächster Schritt:** Baumpositionen ermitteln und speichern (siehe die ältere Anmeldung)

Die Koordinaten (Ostwert, Nordwert) des lokalen Höhenmaximums, des geometrischen Schwerpunktes oder eines interpolierten Wertes jedes einzelnen Objekts können in eine Datei gesichert werden (Koord_Extrakt).

Benennen der Datei.

Diese neu angelegte Datei erhält automatisch alle notwendigen und hinreichenden Informationen des Projekts, des Untersuchungsgebiets (Bestandes-Nummer o.ä.) etc. Sie werden aus den Voreinstellungen übergeben.

**Nächster Schritt:** Exportieren der Datei mit Baumpositionen in ein Satellitennavigationsgerät vorbereiten

Konvertieren der Datei mit den Koordinaten "Koord_Extrakt" in ein Dateiformat, das kompatibel ist mit (mobilen) GPS-/ GALILEO- o.ä. Empfängern. Normalerweise ist ASCII ein universal im- und exportierbares Format.

### Nächster Schritt: Importieren der Datei in einen mobilen GPS-/ GALILEO- o.ä.-Empfänger

Ab diesem Analyseschritt können die einzelnen Objekte, nach Baumärt und anderen Charakteristika klassifiziert und vermessen, mühelos im Gelände eindeutig lokalisiert werden. Die . Genauigkeit der punktgenauen Navigation hängt von der Leistungsfähigkeit des Satellitennavigationssystems und des Empfängers ab. Das ab ca. 2005/2006 operatiönelle europäischen GALILEO wird erheblich genauere Navigationen auch unter dem geschlossenem Kronendach dichter Wälder erlauben als das aktuell verfügbare US-Militär-System GPS oder das russische GLONASS. Im Gespräch ist ein Meter ohne (teure und aufwändige) Zusatzkorrekturen durch Postprocessing, mobile oder feste Referenzstationen etc. Dann wird punktgenaue Navigation zu einzelnen Bäumen möglich und einfach sein und kann zum Standardrepertoire des Managements von Baumbeständen, aber auch des Maßnahmenvollzugs durch Arbeiter werden. In umgekehrter Richtung des Datenflusses können dann hochgenau lokalisierte Beobachtungen aufgenommen und digital an die Einsatzzentrale gemeldet werden. Dabei kann drahtloser Datentransfer wirtschaftlich sein.

### D. Navigieren zum Zielobjekt/Zielort im Einsatzgebiet mittels Satellitennavigation

Die Koordinatendatei wird in den GPS-/ GALILEO- o.ä. Empfänger importiert. Das Gerät begleitet eine Person oder eine Maschine in das Gebiet.

Die Person oder Maschine wird vom GPS-/ GALILEO- o.ä. System im Zielgebiet an den Zielort eines beliebigen der gespeicherten Objekte navigiert.

Im Zielgebiet wird die Person oder Maschine vom GPS-/ GALILEO- o.ä. System vom Ort eines gespeicherten Objekts zu einem beliebigen anderen navigiert, an welchem die geplanten Aufgaben zu erledigen sind. Diese Aufgaben können z.B. sein: Ernte eines bestimmten Baumes, Durchführen einer Pflegemaßnahme, Aufnahme verschiedenster denkbarer Merkmale an Bäumen oder anderen Objekten.

### E. Rückmeldung über den Vollzug oder Status eines erteilten punktgenau erteilten Auftrags an die Leitstelle (Controller)

*Aufgabe:* Digitale Dokumentation und Kontrolle des Vollzugs des Auftrags vor Ort im Gelände.

### Schritte:

Im Büro oder per drahtloser Datenübertragung (Funk, GSM o.ä.): Übermittlung der digitalen Dokumentation des Vollzugs des Auftrags an Zentralrechner.

Im Zentralrechner der Einsatzleitstelle wird die eingegangene Meldedatei geprüft auf Vollständigkeit, Plausibilität, Zeit der Verrichtung etc.

Prüfung auf Vollständigkeit: Anhand von standardisierten Prüfparametern wird jede Datei geprüft. Fehler werden gemeldet und durch angemessene Maßnahmen korrigiert.

*Plausibilitätskontrolle:* Anhand der digitalen Meldung über Art und Koordinaten (Ostwerte, Nordwerte) der Maßnahme wird geprüft, ob die richtigen Maßnahmen richtig ausgeführt wurden, alle Daten abgeliefert wurden.

Speichern der überprüften und ggf. korrigierten Datei mit sprechendem Namen an systematisch zutreffender Stelle in der Verzeichnisstruktur des Auswertesystems.

Einbeziehen der importierten Datei bei künftigen Datenanalysen auf dem System.

### II. Verwendung der Datensätze in Simulatoren als Module von TREESCAPE

Simulatoren sind hier Module des Verfahrens, umgesetzt durch Computerprogramme, in welchen Veränderungen von Zuständen über einen Zeitraum hinweg simuliert werden können. Die geschieht durch Beteiligung von Variablen, Rechenvorschriften, Angaben von Zeitspannen und Veränderungsraten je Zeiteinheit.

Jedem Objekt (jeder Pflanze, Pflanzengruppe oder Bestandeseinheit) werden biologisch plausible arten-, alters-, behandlungs-, standorttypische, klimatische, meteorologische und andere, von obj ektimmanenten oder externen Faktoren abhängige, Veränderungen je Zeiteinheit von Dimension, Form, Gestalt und anderen Merkmalen zur umfassenden Objektbeschreibung zugeordnet. Dabei können *Charakteristika des Konkurrenzverhaltens* (v.a. benachbarter) Pflanzen berücksichtigt werden. Über statistische Zusammenhänge können nicht nur Primärvariablen bei den Simulationen berücksichtigt werden, sondern auch abgeleitete, sekundäre Variablen. Somit können z.B. auch Tiere oder abiotische Objekte in Simulationen berücksichtigt werden.

Der Auswerter kann vorauswählen, vorgeben, voreinstellen:
- *Objektimmanente* Faktoren, unter welchen die Simulation durchgeführt werden soll (z.B. Faktoren zur Klassifikation von Vitalität, Gesundheit, Qualitätsmerkmalen, Wert des Objekts). Objektimmanent ist ein Faktor dann, wenn er im Wesen des Objekt enthalten ist, zu ihm gehört, ihn prägt und charakterisiert.
- *Externe* Faktoren, unter welchen die Simulation durchgeführt werden soll (z.B. Umweltbedingungen wie Boden, Wasser, Klima, Luft, Breitengrad, Datum, Geländerelief, Witterung)
- *Wachstumsrate je Zeiteinheit,* mit welcher sich eine oder mehrere der in der Simulation verwendeten Variablen verändern darf. Diese Wachstumsraten können beliebigen Verlauf haben (z.B. linear, degressiv, progressiv, sprunghaft). Sie können mit oder ohne Berücksichtigung der zum Zeitpunkt *t*_{*i*} bei anderen, nicht direkt an der Simulation beteiligten, Variablen bestehenden Gegebenheiten durchgeführt werden. Dabei können jene dort bestehenden Gegebenheiten entweder als von den Zuständen oder Zustandsveränderungen beeinflußt oder unbeeinflußt in die Betrachtung eingehen.
- *Optional: externe* Faktoren, welche zunächst in die Simulation nicht eingehen, aber zu gewissen Zeitpunkten und für gewisse Zeitspannen mit konstanter oder variabler Intensität innerhalb der Simulation berücksichtigt werden können. Beispiele: Tiere oder abiotische Objekte; Leistungen, Qualitäten, Werte, Leistungen, Qualitäten und Werte beeinflussende Faktoren
- *Zeitspanne,* für welche die Simulation durchgeführt werden soll

Dabei kann jede beliebige Variable, jeder Bestimmungsparameter eines Objekts, eines Faktors, eines Merkmals etc. (mindestens jedoch einer) variiert werden. Variiert werden je Durchlauf können entweder nur einzelne Variablen oder auch Gruppen mehrerer Variablen. Die Zusammenstellung der zu variierenden Variablengruppen kann vom Auswerter vorgenommen werden. Kombinationen sind möglich. Einzelne oder mehrere der involvierten Merkmale können jedoch auch automatisch, ohne Vorauswahl durch einen Auswerter, variiert werden. Dann aber hat die Variation der zu variierenden Variablen mindestens einer Vorschrift von zumindest hohem empirischen Wert zu folgen.

Beim Start der jeweiligen Simulation liegen folgende Datensätze und Vorschriften vor:
- dVOM, DOM, DGM, Orthobild u.a. beschriebene Eingangsdaten und Verfahrensprodukte
- alphanumerische, statistische, grafische, bildhafte o.a. Resultate von Verfahrensmodulen
- Werte von Verfahrens-Variablen
- Andere relevante Daten

Es liegen nun zumindest zweierlei Dateitypen vor. Der eine Typ enthält die Koordinaten, Dimensionen, Geometrien, Attribute etc. der in der Simulation betroffenen (veränderten oder entnommenen) Objekte (Objektdatei_Impakt). Der andere enthält die ursprünglich vorhandenen Daten und Informationen des verbleibenden Gesamtobjekts (Objektdatei_verbleibend).

Der Auswerter kann aus einem Katalog vorgegebener Optionen Maßnahmen ("Impakte") wählen. Dies kann z.B. die Entnahme oder der Ausfall einer beliebigen Anzahl Objekte (Bäume) sein. Das System berechnet die räumlichen Auswirkungen der Resultate zum Startzeitpunkt, zu einem Zeitpunkt t oder über einen Zeitraum hinweg. Diese Resultate können gesichert werden in eine Datei (Impakt_Result).

Nach Maßgabe der Voreinstellungen (z.B. Zeitspanne, Umweltbedingungen) verändert das System die Bestimmungsparameter (Dimension, Form, Gestalt) jedes Einzelobjekts der neuen Datei Impakt_Result_neu.

Das Resultat wird auf dem Monitor angezeigt und kann optional in eine Datei gesichert werden. Diese neu angelegte Datei erhält automatisch alle notwendigen und hinreichenden Informationen des Projekts, des Untersuchungsgebiets (Bestandes-Nummer o.ä.) etc. Diese werden aus den Voreinstellungen übergeben.

### IV Sonder-Module des Verfahrens:

### Vermesser (Surveyor)

*Zweck* dieses Moduls: Punktkoordinaten ermitteln, Strecken messen, Flächen vermessen, Oberflächen vermessen, Volumina vermessen, Objekte zählen und je nach den Bedürfnissen des Auswerters / Auftraggebers quantitativ charakterisieren
   (Differentialmerkmale zur Unterscheidung zwischen den Modulen «» und «»: )
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank):
   Zu analysierender Datensatz, Messvorschrift (Softwaremodul), gewünschte Messgenauigkeit, relevante Vorgaben.
*Aktivität* des Verfahrens: Im Datensatz aufgrund der Vorgaben die Orte, an denen unter Anwendung der Messvorschrift die Messung vorgenommen wird.
*Output:*
   Liste einzelner lokalisierter Messwerte, Statistiken aller Messwerte.

### Vorwissen-Integrator

*Zweck* dieses Moduls: Vorhandene, und dem Analysesystem verfügbare, Informationen über das Untersuchungsgebiet abfragen und den Softwaremodulen für Folgeberechnungen im Bedarfsfall zur Verfügung stellen.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank):
*Aktivität* des Verfahrens: Vor oder während der Auswertung hat der Auswerter Gelegenheit, Informationen über das Untersuchungsgebiet in Listen einzugeben. Diese können (a) frei erstellbar sein (zur Verwendung für den Erläuterungsbericht) oder (b) formalisiert mit einem Wert zu belegen (um im Programmablauf dort, wo vor einer Berechnung eine Information über das Untersuchungsgebiet nützlich oder notwendig wäre, den Wert für die jeweils verwendete Variable aus der Datenbank der formalisierten Informationen entnehmen und in die folgenden Rechnungen einbeziehen zu können).
*Output:* Vorwissen zur Steuerung und Beeinflussung von Entscheidungen im Analyseprozess

### Variablenübersicht

*Zweck* dieses Moduls: Automatisch mit Werten zu belegender Variablen selektieren, Liste erstellen. Liste wird auf das Untersuchungsgebiet angewendet. Optional wird die Variablenliste mit den Werten für ein selektiertes Teilgebiet, z.B. für den aktiven Datensatz, oder für das gesamte Untersuchungsgebiet angezeigt.
*Aktivität* des Verfahrens: alle Variablen anzeigen, vom Auswerter Werte variieren lassen
**Teilmodul: Primärvariablen**
**Teilmodul: Sekundärvariablen**
**Teilmodul: Variablen höherer Ordnung**

### Korrektor

*Zweck* dieses Moduls: Datensatz korrigieren
*Input:* Schwellenwerte, zu korrigierdender Datensatz
*Output:* korrigierter Datensatz

### Volumen- und Flächendifferenzberechner

*Zweck* dieses Moduls: Ermittlung von tatsächlich von einzelnen Bäumen erobertem Standraum und dem potenziellen maximalen individuellem Standraum
*Input:* Basis: Delauny-Triangulation, Voronoi-Polygone um die ermittelten Baumpositionen
*Aktivität* des Verfahrens:
*Output:* Soll-Ist-Vergleich der Standraums der Bäume

### Volumen- und Flächenoptimierer

*Zweck* dieses Moduls: Durch waldbauliche Pfelegemaßnahmen jedem Baum mittel- und langfristig den optimalen Standraum gewähren
*Input:* Basis: Delauny-Triangulation, Voronoi-Polygone um die ermittelten Baumpositionen
*Output:* Entwicklungs- und Pflegeplan zum Standraum-Management

### Waldrand-Detektor und -kartierer

*Zweck* dieses Moduls: Waldaußen- und -innenränder detektieren, vermessen, kartieren
*Input:* Charakteristika von "Waldrand" gemäß Aufgabenstellung
*Aktivität* des Verfahrens: : Kantenextraktion Wald / Nichtwaldgrenze
*Output:* Längen, Undulationsmaße, Statistiken, Grafiken, Vertikalschnitte

### Waldsaum-Charakterisierer

*Zweck* dieses Moduls: Waldaußen- und -innenränder sowie Bestandeslücken und Flanken der Kronenmäntel charakterisieren
*Input:* Wald / Nichtwaldgrenze, Korridor von vorzugebender Breite parallel zu dieser Grenze
*Aktivität* des Verfahrens: Kantenextraktion Wald / Nichtwaldgrenze. Analyse der Strukturen, Rauhigkeiten, Baumarten, Steilheiten innerhalb des Korridors
*Output:* alphanumerische und grafische Charakteristika, Statistiken, Vertikalschnitte

### Flächen-Charakterisierer

*Zweck* dieses Moduls: Den Datensatz in numerischer oder nicht-numerischer Weise thematisch charakterisieren nach Eigenschaften von Variablen, die aus ihm extrahierbar (mit Werten belegbar) sind.
   Dabei können die Variablen Primärvariablen oder abgeleitete Variablen sein Primärvariablen sind Variablen, die direkt aus dem Datensatz gebildet und mit Werten belegt werden können. Abgeleitete Variablen können Sekundärvariablen oder Variablen höherer Ordnung sein. Sekundärvariablen sind Variablen, die ohne Zuhilfenahme von exogenem Wissen aus dem Datensatz gebildet und mit Werten belegt werden können. Variablen höherer Ordnung sind Variablen, die durch Zuhilfenahme von exogenem Wissen aus dem Datensatz gebildet und mit Werten belegt werden können.
   (Differentialmerkmale zur Unterscheidung zwischen den Modulen «Charakterisierer» und «Klassifikator» und «Stratifikator»: )
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank):
   Liste der Variablen, welche mit Werten zu belegen sind. Optional zur Vermeidung von Fehlern: Vorgabe plausibler Minima und Maxima der Variablen.
*Aktivität* des Verfahrens:
   Belegt jede der gewünschten Variablen mit einem Wert, sofern sie im zu analysierenden Datensatz automatisch quantifizierbar sind.
*Output:*
   Liste mit den ermittelten Werten aller gewünschter Variablen. Nicht quantifizierbare Variablen werden gelistet, jedoch mit dem Wert "FALSCH" belegt.

### Klassifikator

*Zweck* dieses Moduls: Den Datensatz unter Beachtung räumlicher Bezüge mit oder ohne thematische Vorgaben einteilen in homogene Gebiete. Homogene Gebiete sind Gebiete mit gleicher Eigenschaft. Gebiete gleicher Eigenschaft(en) sind Teilbereiche des Untersuchungsgebietes, innerhalb welcher eine Variable oder eine Kombination von Variablen gleiche oder ähnliche Eigenschaft(en) aufweisen. Gleiche Eigenschaften weist eine Variable in einem Teilbereich des Untersuchungsgebietes auf, wenn die Werte, mit denen sie belegt sind, innerhalb desselben Wertebereichs liegen. Der Wertebereich einer Variable ergibt sich entweder aus der vorgegebenen Anzahl Klassen, in welche der Wertebereich einzuteilen ist, oder aus konkret vorgegebenen Klassengrenzen. Klassengrenzen sind untere oder obere Grenzwerte. Ein Wertebereich ist definiert durch einen unteren und einen oberen Wert, den die Variable in einem Gebiet annehmen kann.
   Die Aufgabe des Auswerters ist, die dem Untersuchungsziel angemessene Vorgabe zu machen. Hierzu bestimmt er entweder die Anzahl von Klassen, nach der das Untersuchungsgebiet einzuteilen ist, oder er legt die Klassengrenzen derjenigen Klassen fest, in welche der Datensatz zu klassifizieren ist.
   Als Variablen der Klassifikation kommen alle Arten Variablen sowie jede denkbare Kombination von Variablen in Betracht.
   (Differentialmerkmale zur Unterscheidung zwischen den Modulen «Klassifikator» und «Charakterisierer»: Klassifikator geht von Zielsystemen aus. Charakterisierer trachtet danach, jedes Objekt mit maximaler Zahl Variablen sehr genau zu spezifizieren und von anderen Objekten unterscheidbar zu machen)
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank):
*Output:* Klassifikation: Karte mit Legende und Statistiken

### Korrelator

*Zweck* dieses Moduls: (a) Den Variablen, die innerhalb des Verfahrens mit Werten belegt werden können, exogene Daten oder Informationen zuordnen (b) Zusammenhänge zwischen mehreren der Variablen, die innerhalb des Verfahrens aus den Datensätzen mit Werten belegt werden können, untersuchen
*Aktivität* des Verfahrens:
*Output:* Statistiken über Zusammenhänge zwischen den benannten Variablen unter vorgegebenen Regeln

### Modellierer

*Zweck* dieses Moduls: Variablen innerhalb eines Untersuchungsgebietes mit mehr als einem Wert belegen. Dem Auswerter ermöglichen, Situationen zu beschreiben, welche in der Realität nicht notwendigerweise bereits eingetreten sind oder künftig eintreten werden.
*Aktivität* des Verfahrens: Alle genannten Variablen mit Werten belegen und diese gemäß vorgegebenen Regeln variieren
*Output:* digitale Dateien

### Impakt-Simulator

*Zweck* dieses Moduls: Dem Auswerter ermöglichen, Situationen zu konstruieren, welche in der Realität nicht notwendigerweise bereits eingetreten sind oder künftig eintreten werden. Variablen innerhalb eines Untersuchungsgebietes mit mehr als einem Wert belegen.

### a) Halbautomatischer Impakt-Simulator:

*Input:* Der Auswerter gibt alle Variablen vor und wählt die Objekte aus, auf welche sich die Operationen beziehen sollen. z.B.: Durchforstungssimulator: Auswerter wählt die zu entnehmenden Bäume durch Mausklick aus, setzt die Vorgaben und Regeln und startet die Simulation.
*Output:* wahrscheinlicher Zustand am Ende des Simulationszeitraums

### b) Vollautomatischer Impakt-Simulator:

*Input:* Auswerter setzt die Regel abstrakt auf und überläßt die Wahl der Objekte, auf welche die Aktivitäten sich auswirken sollen, dem System.
z.B. selektive Durchforstung unter Förderung des Zukuhftsbaums durch Entnahme dessen stärksten Konkurrenten: Auswerter gibt vor "Suche alle Bäume, deren unmittelbare Nachbarn geringere Höhen und geringere Volumina haben. Ermittle den zweithöchsten Baum in dieser Gruppe. Entnimm diesen. Belege alle Rasterelemente an der frei gewordenen Stelle mit dem Höhenwert h= 0m. Starte dann den Simulationslauf unter Beachtung der Vorgaben.
*Aktivität* des Verfahrens:
*Output:* wahrscheinlicher Zustand am Ende des Simulationszeitraums

### Disponent (Auftraggeber)

*Zweck* dieses Moduls: Automatisches kodieren der Resultate der TREESCAPE-Module in lesbare Text- und Koordinatendateien, welche allgemein verständliche Anweisungen an Menschen sind, konkrete Handlungen im Untersuchungsgebiet vorzunehmen.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Resultate von Verfahrensmodulen, Vorgaben, Regeln, Schwellenwerte

### Prospektor

*Zweck* dieses Moduls: Im Untersuchungs- / Exploitationsgebiet diejenigen Teilgebiete finden und markieren, wo gesuchte Eigenschaften biotischer oder abiotischer Komponenten des Untersuchungsgebietes mit hoher Wahrscheinlichkeit zu erwarten sind. Die Eigenschaften wurden zuvor definiert und durch Wertebereiche solcher Variablen eingegrenzt, die einen straffen statistischen Zusammenhang mit den gesuchten Eigenschaften aufweisen.
   Besonders interessant für Nicht-Holz-Waldprodukte, für Zertifizierungen etc.

### Beispiel 1:

Gesucht sind Bäume mit hoher Stammholz-Stückmasse (d.h.: der einzelne Stamm hat ein großes Volumen).

Es ist bekannt, dass die Wahrscheinlichkeit starkes Stammholz zu finden mit der Variablenkombination [große Baumhöhe UND großer Durchmesser der Lichtkronenbasis] steigt.

Folgerichtig wird das Untersuchungsgebiet nun analysiert unter der Vorgabe:
- (Baumhöhe größer oder gleich 25m) UND (Fläche des Lichtkronenbasispolygons größer oder gleich 25m²)

### Beispiel 2:

Gesucht werden Waldbestände, die mit dem Waldbauverfahren «Femelhieb» bewirtschaftet werden.

Es ist bekannt, dass Femelhiebe in alten Buchenbeständen geführt werden um (a) starkes Stammholz zu entnehmen und (b) die natürliche Regeneration des Buchenbestandes anzuregen. Die stärksten Bäume werden geerntet. In der entstehenden Bestandeslücke samen sich junge Buchen an, wachsen unter Individualkonkurrenz heran und füllen die Lücke wieder aus. Ein neuer Erntebaum wird dort entstehen.

Folgerichtig wird das Untersuchungsgebiet nun analysiert unter der Vorgabe:
- (Baumhöhe größer oder gleich 25m) UND (Fläche des Lichtkronenbasispolygons größer oder gleich 25m²) UND (innerhalb eines Radius um den jeweils getesteten Baum von kleiner oder gleich 200m befinden sich mindestens 5 Bestandeslücken mit einer Fläche von jeweils 25m² bis 50 m²)

*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Variablenliste, Wertebereiche der Variablen, Statistiken der Wertebereiche

*Aktivität* des Verfahrens: Der Prospektor durchsucht das Untersuchungsgebiet unter dem Aspekt aller Vorgaben. Das Untersuchungsgebiet wird dabei durchsucht mit folgendem Auftrag: "Klassifiziere das Untersuchungsgebiet. Verwende dafür die vorgegebene Variablenliste. Dabei kann jede der vorgegebenen Variablen nur mit einem Wert innerhalb des vorgegebenen Wertbereichs belegt sein oder durch die jeweils vorgegebene Statistik erklärt werden. Markiere alle Bereiche, für welche die Vorgaben gültig sind mit einer Farbe oder einem Symbol oder in anderer Weise. Setze dabei an jedem Ort der Originalstichprobe die Marke «WAHR»".

*Output:* Rasterdatensatz in welchem mit einer Farbe oder mit mehreren Farben oder anders symbolisch angezeigt wird, ob am Ort einer Zelle die Vorgaben gut, schlecht oder mittelmäßig erfüllt sind. .

### Gelände-Team - Navigator

*Zweck* dieses Moduls: Menschen (das Gelände-Team) und/oder Maschinen (z.B. Vollerntemaschinen, Prozessoren, Harvester, Rückefahrzeuge) an Orte im Untersuchungs-/Bearbeitungsgebiet navigieren, wo konkrete Aktivitäten vorzunehmen sind.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Zielkoordinate(n), Aufgabenliste (z.B. in gekoppeltem Feldaufnahmecomputer)
*Aktivität* des Verfahrens: Koordinate (Ist-Standort) verglichen mit Koordinate (Soll-Standort), Zum Ziel hin lenken
*Output:* optische / akustische Signale

### Rückmelder / Vollzugsmelder (Controller-Feedbacker)

*Zweck* dieses Moduls: Die Mitteilungen des Gelände-Teams für die Einsatzleitstelle an den Rechner leiten, dort in die Datenbank integrieren und künftigen Berechnungen verfügbar machen. Hierzu eignet sich ein Handheld PC, ein Palmtop o.ä. mobiles Datenerfassungsgerät. Die aktuelle Koordinate eines Satellitennavigationssystems sollte mit der Meldung automatisch gesichert und übermittelt werden.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Daten
*Aktivität* des Verfahrens: Sichern, Archivieren, Exportieren
*Output:* mit Zentralrechner kompatibler Datensatz

### Stratifikator

*Zweck dieses Moduls:* die Elemente des zu analysierenden Datensatzes jeweils einer Merkmalsklasse zuordnen. [Eine Merkmalsklasse wird definiert durch die Ausprägung einer einzelnen Variable oder durch die Ausprägungen von mehreren Variablen, nach welchen der Datensatz zu stratifizieren ist.] Dies erfolgt für eine Gruppe mehrerer Variablen dadurch, dass in ihr die Ausprägung der jeweiligen Variable innerhalb eines Wertebereichs, oberhalb eines Schwellenwertes oder unterhalb eines Schwellenwertes liegt. Das Modul teilt den Datensatz ein in Regionen. Eine Region ist dadurch gekennzeichnet, dass innerhalb ihrer Außengrenze die Variabilitäten derjenigen Variablen, nach deren Ausprägung sie sich definiert, geringer ist als zwischen ihr und unmittelbar benachbarter Regionen.
   Unmittelbar benachbarte Elemente gelten als ein und dasselbe *Objekt.* [Unmittelbar benachbart sind zwei oder mehr Elemente dann, wenn sie mindestens eine gemeinsame *Kante* aufweisen. Erfordert es die Analyse, dann kann «Nachbarschaft» auch als durch einen gemeinsamen *Eckpunkt* hergestellt gelten.]
   Die Außengrenze jedes Obj ekts wird vektorisiert.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank):
*Aktivität* des Verfahrens: Homogenisieren komplexester Untersuchungsgebiete durch Bildung homogener Straten, unabhängig von deren räumlicher Lage.
*Output:* Rasterdatensatz und / oder Vektordatensatz, der alle diejenigen Regionen anzeigt oder ausschließlich beinhaltet, für welche die Voreinstellungen gültig sind.

### Frühwarner

*Zweck dieses Moduls:* Unter Beachtung vorhandener Kenntnisse über einen oder mehrere kritische Schwellenwerte (untere Schwelle, obere Schwelle) einer oder mehrerer Variablen automatisch anzeigen (alarmieren), dass in einem Gebiet zu einem gewissen Zeitpunkt mit hoher Wahrscheinlichkeit dieser Schwellenwert erreicht sein wird.
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Variablen, Kardinalwerte dieser Variablen, Regeln unter den Aspekten steigender Risiken bei konvergierendem Erreichen von Schwellenwerten mehrerer Variablen unter gewissen Rahmenbedingungen
*Output:* Warnmeldung

### Statistiker

*Zweck* dieses Moduls: Statistiken der Variablen erstellen für das gesamte Untersuchungsgebiet oder für selektierte Teilgebiete, z.B. für den aktiven Datensatz. In die Betrachtungen kann optional das dem System bekannte (formalisierte) Vorwissen sowie weitere (freie) exogene Daten und Informationen einbezogen werden.
   (Differentialmerkmale zur Unterscheidung zwischen den Modulen «Statistiker» und «Data Miner»: Statistiker führt nur Standard-Berechnungen durch. Data miner gestattet, falls gewünscht, weitgehend planloses Vergleichen und Testen auf der Suche nach neuen Erkenntnissen.)
*Input* Auswahl des gewünschten Standard-Wizards, manuelle Eingabe von Schwellen- oder Grenzwerten oder Verweis auf Datenbestände und anschließender fallweiser Datenimport aus geeigneten Listen oder Datenbanken
*Output:* alphanumerische oder grafische Statistiken

### Data Miner

*Zweck* dieses Moduls: Zusammenhänge zwischen Variablen untersuchen. Neue Erkenntnisse gewinnen. Vorgaben sind möglich, indem die relevanten Kardinalwerte jeder Variable variabel gemacht werden können und dann editierbar sind. Kardinalwerte sind hierbei jeglicher Wert, der hinsichtlich einer Untersuchung bedeutsam ist, z.B. Extremwerte, Mittelwerte, Streuungen, Perzentile, Quartile, Schwellenwerte, Korrelationen, Trends unter konkreten Rahmenbedingungen. Dabei können Simulationen mit selbst variierenden Variablenwerten nach Art von Stapelverarbeitungen definiert und durchgeführt werden. Inwieweit der Auswerter hierbei gezielt, planvoll oder streuend explorierend vorgeht, steht ihm frei.
*Input:* aus Listen selektierte Variablen; je Variable einen oder mehrere Kardinalwerte
*Aktivität* des Verfahrens: nach Setzen der Voreinstellungen arbeitet das System automatisch
*Output:* digitale Listen, Tabellen, Diagramme von Resultaten der durchgeführten Analysen

### Räumliches Gesamtmodell der Landschaft samt Vegetation

*Zweck* dieses Moduls: Das Untersuchungsgebiet räumlich rekonstruieren als Oberflächenmodell, wobei das dVOM auf das DGM so aufgesetzt wird, dass wieder ein DOM entsteht, in welchem die Höhe jedes Punkts die Summe aus der lokalen Geländehöhe und der Höhe des über dem Geländeniveau befindlichen vermessenen Objekts ist. Allerdings wurden dem dVOM zuvor alle benötigten Resultate abgewonnen.
   Dieses DOM sei hier «konstruiertes Oberflächenmodell» **(KOM)** genannt. Es ähnelt dem ursprünglich importierten DOM, aus welchem anfangs das dVOM konstruiert wurde. Allerdings bieten sich bei dem neuen KOM alle Möglichkeiten der Präsentation räumlicher Informationen, so als arbeite man noch mit dem dVOM. Die aus dem dVOM extrahierten alphanumerischen, grafischen u.a. Daten und Informationen können optional mit dem KOM angezeigt werden.
*Input:* Auswahl des gewünschten Moduls. Optional: Aktivieren derselben Optionen wie in der Phase der dVOM -Analysen.
*Output:* Das hier «konstruierte Oberflächenmodell» (KOM). Optional: beliebige der alphanumerischen und grafischen Informationen wie in der Phase der dVOM -Analysen.

### VR-Texturierer

*Zweck* dieses Moduls: die Realität virtuell illustrieren (VR: virtuelle Realität). Das Oberflächenmodell mit einer Textur belegen (*draping*). Die Textur wird z.B. aus dem Ortho-Bilddatensatz bezogen. Sie kann auch künstlich erzeugt werden.
*Input:* 2,5D-Datensatz, Ortho-Spektralbildraster
*Aktivität* des Verfahrens: Die spektralbildhafte Textur wird dem anderen nichtbildhaften Raster überlagert, so dass die Realität visuell angenähert wird.
*Output:* plastisches Objekt, welches eine Textur und Farbe besitzt, die dem Betrachter Realitätsnähe suggerieren.

### Insolations-Simulator

*Zweck* dieses Moduls: Für jeden beliebigen Ort im Untersuchungsgebiet (z.B. auf der Nordund Südhemisphäre der Erde) wird das Untersuchungsgebiet mit den Werten des realistischen Sonnenstands (Horizontalwinkel, Vertikalwinkel, Intensität, Qualität) ausgeleuchtet.
*Input:* Hemisphäre (Nord / Süd), Breitengrad, Längengrad, Tag, Monat, Jahr, Tageszeit
*Aktivität* des Verfahrens: Das räumliche Modell wird so illuminiert, wie es in der Realität geschehen würde. Hieraus können Licht- und Schattenorte identifiziert und lokalisiert werden. Hieraus lassen sich z.B. waldbauliche Maßnahmen ableiten.
*Output:* 2,5-D Modell, realistisch illuminiert. Markierung von Licht- bzw. Schattenbereichen. Flächenberechnungen. Numerische und grafische Folgerungen für Risiken, Ertragsprognosen, menschliches Handeln.

### Bestandesdynamik-Simulator

*Zweck* dieses Moduls: Das Pflanzenwachstum im Untersuchungsgebiet simulieren über einen frei bestimmbaren Zeitraum und unter variablen Regeln unter optionaler Einbeziehung «unvorhergesehener Ereignisse». Untersuchungsgebiet kann auch ein einzelnes Stratum, eine einzelne Klasse oder ein beliebiger Ausschnitt des eigentlichen Untersuchungsgebiets sein.
*Input* (durch Auswahl des gewünschten Standard-Moduls, durch manuelle Eingabe von Schwellen- oder Grenzwerten oder durch Verweis auf Datenbestand und anschließenden fallweisen Datenimport aus entsprechender Datenbank): Datei, Auswahl von Einzelobjekten, Setzen von Attributen auf einzelne Objekte. Vorgabe von individuellen Variationsmöglichkeiten und -schranken der Dimensionen der selektierten Objekte. Vorgabe des Zeitraums, über den die Simulation laufen soll. Vorgabe von Regeln (z.B. Konkurrenzverhalten gegenüber Nachbarn: Bäume mit großflächiger Lichtkronenbasis und längerer Lichtkrone auf günstigem Standort haben eine größere Chance den Wuchsraum zu' erobern als geringer dimensionierte Bäume in deren Nachbarschaft. Vitale starke alte gesunde Bäume können kleinere, schwache Bäume verdrängen).
*Aktivität* des Verfahrens: Berechnung und Studium möglicher Entwicklungen vielerlei Komponenten des Untersuchungsgebiets.
*Output:* Zustand am Ende des Simulationszeitraums unter den Voreinstellungen, Regeln und Beschränkungen.

### Drahtlose Datenübertragung

Daten via drähtloser Übertragung (z.B. durch Internet) aus dem Analyse- bzw. Informationssystem exportieren, oder in diese importieren ohne das Untersuchungsgebiet verlassen zu müssen.

*Output:* Datenstrom, der aus dem System heraus oder in dieses hinein führt.

### Drahtlose Datenübertragung: Telefon-FeedBack

*Zweck* dieses Moduls: Mittels des Dialers einer integrierten Datenbank von Telefonnummern Informationen einholen, Rücksprache halten, lokale Gegebenheiten diskutieren, Kurzbesprechungen durchführen, Anweisungen und Entscheidungen einholen
*Input* (durch Auswahl des gewünschten Standard-Moduls oder durch manuelle Eingabe von Schwellen- oder Grenzwerten oder durch Verweis auf Datenbestand und anschließenden fallweisen Datenimport aus entsprechender Datenbank): Nummer, ID, optional Koordinate, Stimme, Bilder oder Daten. Mobiltelefone mit digitaler Fotoaufnahmemöglichkeit sind hier interessant, weil Fotos aus dem Gelände in die Zentrale gesendet, dort evaluiert und zur Grundlage neuer Anweisungen gemacht werden können.

### Drahtlose Datenübertragung: Modem-Abfrage (download-Modus)

*Zweck* dieses Moduls: Mittels einer drahtlosen Funk-(Internet-)Verbindung Daten oder Informationen beschaffen und in den Entscheidungsprozess des Gelände-Teams (digital) integrieren.
*Input:* Nummer, ID, optional Koordinate
*Aktivität* des Verfahrens: Daten per Datenfernübertragung importieren
*Output:* aktuelle Daten, im Gelände zu beliebigem Zeitpunkt verfügbar

### Drahtlose Datenübertragung: Modem-Melder (upload-Modus)

*Zweck* dieses Moduls: Daten aus dem Gelände via (Funk-)Telefonverbindung an einen entlegenen Ort (z.B. Einsatzleitzentrale) versenden.
*Input:* Nummer, ID, optional Koordinate, Stimme oder Daten
*Output:* aktuelle Daten aus dem Gelände in der Zentrale verfügbar. Kontrolle. Überwachung.

### Software-Aktualisierer

*Zweck* dieses Moduls: Ausführbare Software (z.B. Änderungen, Erweiterungen, Korrekturen, Speziallösungen des Analysesystems) bei Bedarf auf Anforderung an den Betreiber abrufen, empfangen und installieren, ohne das Untersuchungsgebiet verlassen zu müssen.
*Input* Auswahl des gewünschten Software-Moduls, Eingeben der Zieladresse, Senden der Anfrage an die Zieladresse, nach erfolgtem Empfang Empfangsbestätigung senden
   (Differentialmerkmale zur Unterscheidung zum Modul «Online-Empfänger / Datenbeschaffer / Aktualisierer von Datenbeständen im Analysesystem»: Das Modul «Software-Aktualisierer» dient ausschließlich dem Download ausführbarer Computerprogramme. Das andere importiert Daten mit Informationscharakter.)
*Aktivität* des Verfahrens: Anfrage senden, Identifikation senden, Passwort senden, Schnittstelle für Import aktivieren, Datenstrom empfangen.
*Output:* Datenstrom (kompilierter Quellcode), der in das System hinein führt.

### Report-Generator

*Zweck* dieses Moduls: Alle Resultate aufgrund einer Standardschablone in einen Erläuterungsbericht (in plattformunabhängigem und editierbarem Format, z.B. Format: HTML) integrieren.
*Input:* Auswahl des gewünschten Standard-Moduls, Verweis auf alle Datenbestände, welche im Erläuterungsbericht erscheinen sollen.
*Aktivität* des Verfahrens: Datenimport aus adressierten Dateien (z.B. alphanumerische Zeichen, Text, Bilder, Grafiken) in eine Ausgabedatei, Sichern der erzeugten Datei, Verwendung (z.B. Druck-Ausgabe) der Datei nach Bedarf.
*Output:* Digitale Ausgabedatei in plattformunabhängigem editierbarem Format, z.B. Format: HTML.

## Patentansprüche

1. Verfahren zur Fernerkundung morphologisch und strukturell komplexer Objekte in einem Objektraum, mit den Schritten:
a) Erfassen von Topometriedaten und -informationen in dem Objektraum;
b) Erfassen von Mörphometriedaten und -informationen;
c) Auswerten der Topometriedaten und -informationen und der Morphometriedaten und -Informationen;
d) Wiedergeben der ausgewerteten Topometriedaten und -informationen und Morphometriedaten und -informationen als maschinenlesbare oder sensitiv wahrnehmbare Datensätze,
**dadurch gekennzeichnet,**
**daß** die ausgewerteten Topometriedaten und -informationen sowie Morphometriedaten und -informationen einem Sondermodul aus der Gruppe bestehend aus Vermesser, Vorwissen-Integrator, Variablenübersicht (Primärvariablen, Sekundärvariablen, Variablen höherer Ordnung), Korrektor, Volumen- und Flächendifferenzberechner, Volumen- und Flächenoptimierer, Waldrand-Detektor und -kartierer, Waldsaum-Charakterisierer, Flächen-Charakterisierer, Klassifikator, Korrelator, Modellierer, Impakt-Simulator (halbautomatisch oder automatisch), Disponent, Prospektor, Navigator, Rückmelder/Vollzugsmelder, Stratifikator, Frühwarner, Statistiker, *Data miner,* Räumliches Gesamtmodell der Landschaft samt Vegetation, VR-Texturierer, Insolations-Simulator, Bestaudesdynamik-Simulator, Drahtlose Datenübertragung (Telefon-Feedback, Modem-Abfrage, Modem-Melder, Software-Aktualisierer, Report-Generator zur modulabhängigen Weiteiverarbeitung zur Verfügung gestellt werden.

2. Verfahren nach Anspruch 1,
**dadurch gekennzeichnet,**
**daß** mit dem Vermesser-Modul Punktkoordinaten ermittelt, Strecken gemessen, Flächen vermessen, Oberflächen vermessen, Volumina vermessen, Objekte gezählt und in Abhängigkeit von der Auswertung quantitativ charakterisiert werden.

3. Verfahren nach Anspruch 1 oder 2,
**dadurch gekennzeichnet,**
**daß** mit dem Vorwissen-Integrator Vorwissen, sei es formalisiert, standardisiert oder frei einzugeben, so in das Analysesystem eingegeben werden kann, dass es bei Analyseschritten, bei welchen Vorwissen nützlich ist, automatisch und ohne Kenntnis des Auswerters zur Verfügung steht.

4. Verfahren nach einem der Ansprüche 1 bis 3,
**dadurch gekennzeichnet,**
**daß** mit der Variablenübersicht Primär-, Sekundärvariablen und Variablen höherer Ordnung angezeigt, gesteuert und für weitere Analysen vorbereitet werden.

5. Verfahren nach einem der vorstehenden Ansprüche,
**dadurch gekennzeichnet,**
**daß** mit dem Korrektor der zu analysierende Datensatz korrigiert wird, indem fehlende Werte durch Interpolationen, Schätzungen und Schwellenwertsetzungen ergänzt und redundante Werte (z.B. nach Mittelwertbildung) durch einen korrigierten Wert ersetzt werden

6. Verfahren nach einem der vorstehenden Ansprüche,
**dadurch gekennzeichnet,**
**daß** mit dem Volumen- und Flächendifferenzberechner (a) der tatsächlich von einzelnen Bäumen eroberte Standraum und der potenziell maximale individuelle Standraum ermittelt und miteinander verglichen werden, mit dem Resultat der Information über Einbußen an Biomasseproduktivität der Einzelpflanze und des gesamten Beobachtungsraums und (b) Zu- und Abnahmen von Flächen, Volumina und Massen während eines Zeitraums ermittelt werden

7. Verfahren nach einem der vorstehenden Ansprüche,
**dadurch gekennzeichnet,**
**daß** mit dem Volumen- und Flächenoptimierer Information über Einbußen an Biomasseproduktivität der Einzelpflanze und des gesamten Beobachtungsraums zum Zweck der Optimierung des Stand- und Wuchsraum-Managements und der Erschließung durch Bewirtschaftungs-, Pflege- und Kontrollinfrastrukturen gewonnen werden

8. Verfahren nach einem der vorstehenden Ansprüche,
**dadurch gekennzeichnet,**
**daß** mit dem Waldrand-Detektor und -kartierer Waldaußen- und -innenränder detektiert, vermessen und kartiert werden

9. Verfahren nach einem der vorstehenden Ansprüche,
**dadurch gekennzeichnet,**
**daß** mit dem Waldsaum-Charakterisierer Waldaußen- und -innenränder sowie Bestandeslücken und Flanken der Kronenmäntel gemäß der jeweiligen Aufgabenstellung charakterisiert werden

10. Verfahren nach einem der vorstehenden Ansprüche,
**dadurch gekennzeichnet,**
**daß** mit dem Flächen-Charakterisierer der Datensatz in numerischer oder nicht-numerischer Weise thematisch charakterisiert wird nach Eigenschaften von Variablen, die aus ihm extrahierbar (mit Werten belegbar) sind

11. Verfahren nach einem der vorstehenden Ansprüche,
**dadurch gekennzeichnet,**
**daß** mit dem Klassifikator der Datensatz unter Beachtung räumlicher Bezüge mit oder ohne thematische Vorgaben in homogene Gebiete eingeteilt werden kann

12. Verfahren nach einem der vorstehenden Ansprüche,
**dadurch gekennzeichnet,**
**daß** mit dem Korrelator (a) den Variablen, die innerhalb des Verfahrens mit Werten belegt werden können, exogene Daten oder Informationen zugeordnet und (b) Zusammenhänge zwischen mehreren der Variablen, die innerhalb des Verfahrens aus den Datensätzen mit Werten belegt werden können, untersucht werden können

13. Verfahren nach einem der vorstehenden Ansprüche,
**dadurch gekennzeichnet,**
**daß** mit dem Modellierer Variablen innerhalb eines Untersuchungsgebietes mit mehr als einem Wert belegt, variiert und die verschiedenen Resultate bewertet werden können

14. Verfahren nach einem der vorstehenden Ansprüche,
**dadurch gekennzeichnet,**
**daß** mit dem Impakt-Simulator halbautomatisch oder vollautomatisch Variablen innerhalb eines Untersuchungsgebietes mit mehr als einem Wert belegt werden können, um Situationen zu konstruieren, welche in der Realität nicht notwendigerweise bereits eingetreten sind oder künftig eintreten können

15. Verfahren nach einem der vorstehenden Ansprüche,
**dadurch gekennzeichnet,**
**daß** mit dem Disponent Resultate von Verfahrensmodulen, Vorgaben, Regeln, Schwellenwerte etc. automatisiert in allgemein verständliche Anweisungen an Menschen transformiert werden, konkrete Handlungen im Untersuchungsraum vorzunehmen

16. Verfahren nach einem der vorstehenden Ansprüche,
**dadurch gekennzeichnet,**
**daß** mit dem Prospektor der Untersuchungsraum anhand aller verfügbarer Daten und Informationen automatisiert so analysiert wird, dass die Resultate der Analysen die Positionen und Wahrscheinlichkeiten des Auftretens oder der Abwesenheit gesuchter Phänomene, Objekte, Eigenschaften berechnet, angezeigt und dokumentiert werden können

17. Verfahren nach einem der vorstehenden Ansprüche,
**dadurch gekennzeichnet,**
**daß** mit dem Gelände-Team - Navigator Menschen, Maschinen und Gerät punktgenau zum Zielobjekt geleitet werden, wobei die Einsatzzentrale bedarfsweise in Echtzeit oder nachträglich über die aktuelle Position und den zurückgelegten Weg informiert werden kann

18. Verfahren nach einem der vorstehenden Ansprüche,
**dadurch gekennzeichnet,**
**daß** mit dem Rückmelder / Vollzugsmelder (Controller-Feedbacker) vom Feldaufnahmesystem (bestehend aus Computern, Sende- und Empfangsgerät, Menschen, Maschinen) in die Leitstelle Daten und Informationen aller Art gesendet werden können, v.a. solche, die über den Vollzug der angewiesenen Maßnahme berichten

19. Verfahren nach einem der vorstehenden Ansprüche,
**dadurch gekennzeichnet,**
**daß** mit dem Stratifikator die System-endogenen Variablen und System-exogenen Variablen dazu verwendet werden können, den Untersuchungsraum nach Maßgabe von Schwellenwerten der Variablenbelegungen (untere und obere Grenzwerte - Klassengrenzen) in Teilbereiche gleicher oder ähnlicher Charakteristik so zu gliedern, dass weitere Analysen und Betrachtungen durch die Vorstratifizierung erleichtert, präzisiert oder ermöglicht werden

20. Verfahren nach einem der vorstehenden Ansprüche,
**dadurch gekennzeichnet,**
**daß** mit dem Frühwamer auf Grundlage der System-endogenen Variablen und System-exogenen Variablen kritische Systemkonstellationen im Untersuchungsraum vorausgesagt werden können

21. Verfahren nach einem der vorstehenden Ansprüche,
**dadurch gekennzeichnet,**
**daß** mit dem Statistiker die System-endogenen Variablen miteinander, aber auch mit system-exogenen Variablen in Bezug gesetzt und analysiert werden können

22. Verfahren nach einem der vorstehenden Ansprüche,
**dadurch gekennzeichnet,**
**daß** mit dem Modul «Räumliches Gesamtmodell der Landschaft samt Vegetation » das normierte digitale Oberflächenmodell (dVOM= DOM - DGM) nach Abschluss der gewünschten Analysen wieder so auf das DGM aufgesetzt erscheint, dass die Situation des ursprünglichen DOM wieder hergestellt ist, darin jedoch die Komponenten des dVOM mit allen Darstellungsoptionen ausgestattet werden können, wie es vor dieser Zusammenführung nur im dVOM möglich war

23. Verfahren nach einem der vorstehenden Ansprüche,
**dadurch gekennzeichnet,**
**daß** mit dem *Data Miner* die Werte aller Variablen im Analysesystem so miteinander in Bezug gesetzt werden können, dass aus den Analysen auch solche Erkenntnisse gezogen werden können, die vor Durchführung des *Data mining* nicht einmal in Erwägung gezogen wurden

24. Verfahren nach einem der vorstehenden Ansprüche,
**dadurch gekennzeichnet,**
**daß** mit dem Insolations-Simulator die räumliche Charakteristik der elektromagnetischen Einstrahlung (v.a. der Sonneneinstrahlung) im Untersuchungsraum simuliert und in beliebigen Analysen berücksichtigt werden kann

25. Verfahren nach einem der vorstehenden Ansprüche,
**dadurch gekennzeichnet,**
**daß** mit dem Bestandesdynamik-Simulator jegliche dem Faktor Zeit unterliegenden Phänomene (Prozesse) numerisch und visuell in das Analyse- und Darstellungssystem integriert werden können

26. Verfahren nach einem der vorstehenden Ansprüche,
**dadurch gekennzeichnet,**
**daß** mit dem VR-Texturierer eine grafische Wiedergabe des Oberflächenmodells mit einer Textur belegt oder überzogen werden kann, dass diese einem menschlichen Betrachter den visuellen Eindruck einer spektralen Abbildung vermittelt

27. Verfahren nach einem der vorstehenden Ansprüche,
**dadurch gekennzeichnet,**
**daß** mit dem Modul «Drahtlose Datenübertragung (Telefon-FeedBack, Modem-Abfrage, Modem-Melden» der Feldaufnahme-Computer Signale (Datenstöme, Bilder und Sprache) drahtlos sowohl gesendet wie auch empfangen werden können

28. Verfahren nach einem der vorstehenden Ansprüche,
**dadurch gekennzeichnet,**
**daß** mit dem Report-Generator automatisiert Text, Zahlen, Grafiken, Diagramme, Bilder, Animationen und weitere Resultate des beschriebenen Verfahrens so arrangiert werden können, dass die resultierende Datei die Merkmale eines vollständigen, Menschen lesbaren und verständlichen Gesamtbericht aufweisen

29. Verfahren nach einem der vorstehenden Ansprüche,
**dadurch gekennzeichnet,**
**daß** mit dem Software-Aktualisierer die auf einem Computer installierte Version der Software, mit welcher das beschriebene Verfahren operationalisiert wird, komplett oder modulweise online aktualisiert werden kann
